(19) **Europäisches Patentamt / European Patent Office / Office européen des brevets**

(11) **EP 4 174 105 B1**

(12) **EUROPEAN PATENT SPECIFICATION**

(45) Date of publication and mention
of the grant of the patent:
**13.12.2023 Bulletin 2023/50**

(21) Application number: **22203601.4**

(22) Date of filing: **25.10.2022**

(51) International Patent Classification (IPC):
*C08G 63/00* (2006.01)    *C08G 63/16* (2006.01)
*C08G 63/78* (2006.01)

(52) Cooperative Patent Classification (CPC):
**C08G 63/181; C08G 63/183; C08G 63/20;
C08G 63/78;** Y02W 30/62

(54) **SEMI-AROMATIC POLYESTER AND PREPARATION METHOD AND APPLICATION THEREOF**

HALBAROMATISCHER POLYESTER SOWIE HERSTELLUNGSVERFAHREN UND ANWENDUNG DAVON

POLYESTER SEMI-AROMATIQUE, SON PROCÉDÉ DE PRÉPARATION ET SON APPLICATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.10.2021 CN 202111248549**

(43) Date of publication of application:
**03.05.2023 Bulletin 2023/18**

(73) Proprietors:
- **Jiangsu Kingfa Sci. & Tech. Advanced Materials Co., Ltd.**
  **Suzhou, Guangdong 215300 (CN)**
- **Zhuhai Wango Chemical Co., Ltd.**
  **Zhuhai, Guangdong 519050 (CN)**
- **KINGFA SCI. & TECH. CO., LTD.**
  **Guangzhou, Guangdong 510663 (CN)**

(72) Inventors:
- **ZHANG, Chuanhui**
  **Suzhou, 215300 (CN)**
- **CHEN, Pingxu**
  **Guangzhou, 510663 (CN)**
- **YE, Nanbiao**
  **Guangzhou, 510663 (CN)**
- **OUYANG, Chunping**
  **Zhuhai, 519050 (CN)**
- **MAI, Kaijin**
  **Zhuhai, 519050 (CN)**
- **DONG, Xueteng**
  **Zhuhai, 519050 (CN)**
- **ZENG, Xiangbin**
  **Zhuhai, 519050 (CN)**
- **LU, Changli**
  **Zhuhai, 519050 (CN)**
- **CAI, Tongmin**
  **Zhuhai, 519050 (CN)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(56) References cited:
**CN-A- 112 280 026      CN-B- 103 483 571
US-A1- 2014 128 514**

## Description

## TECHNICAL FIELD

The present invention relates to the field of biodegradable polyester, and in particular to a semi-aromatic polyester having a specific double bond content and a preparation method and an application thereof.

## BACKGROUND

A biodegradable aliphatic-aromatic copolyester can be prepared by aliphatic diacids or derivatives thereof, aliphatic diols, aromatic diacids or derivatives thereof. Represented by Ecoflex produced by Germany BASF, the copolyester is made of raw materials of 1,6-adipic acid (AA), 1,4-butanediol (BDO) and terephthalic acid. The copolyester has a lower melt volume flow rate (MVR) and thus, has excellent machinability, and further has good hydrolysis resistance due to a low acid value. However, relative to aromatic polyesters PET, PBT, and the like, the semi-aromatic polyester is more likely to thermal decomposition to generate double bonds, carboxyl group and other structures after thermal degradation, thus resulting in worsened properties of polymerization products, which is against the further use. CN 103 483 571 B discloses a double bond containing full bio-based polyester made of aliphatic diacids and diols.

## SUMMARY

To solve the above problems, the objective of the present invention is to provide a semi-aromatic polyester. With a specific double bond content, the semi-aromatic polyester has better melting heat retention stability and fine color.
Another objective of the present invention is to provide a preparation method of the above semi-aromatic polyester.
The above objectives of the present invention are achieved by the following technical solutions.
A semi-aromatic polyester, derived from a repeating unit consisting of the following components:

a first component A, based on a total molar weight of the first component A, including:

a1) 40-60 mol% of at least one aliphatic dicarboxylic acid or a derivative thereof;
a2) 40-60 mol% of at least one aromatic dicarboxylic acid or a derivative thereof;

a second component B: including a diol having 2-12 carbon atoms;
where the semi-aromatic polyester has a double bond content of 0.55-4.5 mmol/kg, preferably, 0.70-2.5 mmol/kg, and more preferably, 0.75-0.95 mmol/kg.

During the synthesis of a polyester, there exists a larger difference in the molecular structure of the polyester prepared finally due to the influences of multiple factors such as, different monomer structures or ratios of raw materials, different kinds of catalysts, branching agents and chain extenders, preparation technology, reaction time and polymerization temperature. In this present invention, it has been found through studies that the double bond content in the semi-aromatic polyester is closely related to the melting heat retention stability and color of the semi-aromatic polyester.
In this present invention, it has been accidentally found through studies that when the double bond content in the semi-aromatic polyester is controlled within a range of 0.55-4.5 mmol/kg, the obtained semi-aromatic polyester has better melting heat retention stability and fine color.
In this present invention, the component a1), namely the aliphatic dicarboxylic acid or a derivative thereof is selected from one or a mixture of several of oxalic acid, propandioic acid, succinic acid, glutaric acid, adipic acid, heptanedioic acid, octanedioic acid, azelaic acid, decanedioic acid, 1,11-undecanedicarboxylic acid, 1,10-decanedicarboxylic acid, undecandioic acid, 1,12-dodecanedicarboxylic acid, hexadecane diacid, eicosandioic acid, tetracosandioic acid or an ester derivative thereof or an anhydride derivative thereof.
As a specific example, the component a1) is selected from one or more of oxalic acid, dimethyl oxalate, malonic acid, dimethyl malonate, succinic acid, dimethyl succinate, methylsuccinic acid, glutaric acid, dimethyl glutarate, bis(2-hydroxyethyl) glutarate, bis(3-hydroxypropyl) glutarate, bis(4-hydroxybutyl) glutarate, 2-methylglutaric acid, 3-methylglutaric acid, adipic acid, dimethyl adipate, bis(2-hydroxyethyl)adipate, bis(3-hydroxypropyl)adipate, bis(4-hydroxybutyl)adipate, 3-methyladipic acid, 2,2,5,5-tetramethyladipic acid, heptanedioic acid, octanedioic acid, azelaic acid, dimethyl azelate, decanedioic acid, 1,11-undecanedicarboxylic acid, 1,10-decanedicarboxylic acid, undecandioic acid, 1,12-dodecanedicarboxylic acid, hexadecane diacid, eicosandioic acid, tetracosandioic acid, dimer acid or an ester derivative thereof or an anhydride derivative thereof; preferably, one or more of succinic acid, adipic acid, decanedioic acid, 1,12-dodecanedicarboxylic acid, or an ester derivative thereof or an anhydride derivative thereof; more preferably, one or two of adipic acid, decanedioic acid or an ester derivative thereof or an anhydride derivative thereof; most preferably, adipic acid or an ester derivative thereof or an anhydride derivative thereof.

In the present invention, the component a2), namely, the aromatic dicarboxylic acid or a derivative thereof is selected from one or a mixture of several of terephthalic acid, iso-phthalic acid, naphthalenedicarboxylic acid, or an ester derivative thereof or an anhydride derivative thereof; preferably, terephthalic acid or an ester derivative thereof or an anhydride derivative thereof.

As a specific example, the component a2) is selected from one or more of terephthalic acid, dimethyl terephthalate, bis(2-hydroxyethyl)terephthalate, bis(3-hydroxypropyl)terephthalate, bis(4-hydroxybutyl)terephthalate, isophthalic acid, dimethyl isophthalate, bis(2-hydroxyethyl)isophthalate, bis(3-hydroxypropyl)isophthalate, bis(4-hydroxybutyl)isophthalate, 2,6-naphthalene dicarboxylic acid, dimethyl 2, 6-phthalate, 2,7-naphthalene dicarboxylic acid, dimethyl 2, 7-phthalate, 3,4'-diphenyl ether dicarboxylic acid, dimethyl 3,4'-oxybisbenzoate, 4,4'-diphenyl ether dicarboxylic acid, dimethyl 4,4'-oxybisbenzoate, 3,4'-phenyl thioether dicarboxylic acid, dimethyl 3,4'-thioether bisbenzoate, 4,4'-diphenyl thioether dicarboxylic acid, dimethyl 4,4'-thioether bisbenzoate, 3,4'-diphenylsulfone dicarboxylic acid, dimethyl 3,4'-sulfonyl bisbenzoate, 4,4'-diphenylsulfone dicarboxylic acid, dimethyl 4,4'-sulfonyl bisbenzoate, 3,4'-benzophenone dicarboxylic acid, dimethyl 3,4'-ketone bisbenzoate, 4,4'-benzophenone dicarboxylic acid, dimethyl 4,4'-ketone bisbenzoate, 1,4-naphthalene dicarboxylic acid, dimethyl 1,4-naphthalate, 4,4'-methylene-bis(benzoic acid), 4,4'-methylene-bis(dimethyl benzoate) or an ester derivative thereof or an anhydride derivative thereof; preferably, terephthalic acid or an ester derivative thereof or an anhydride derivative thereof.

In the present invention, the second component B is selected from one or more of ethanediol, 1,3-propanediol, 1,4-butanediol, 1,5-pentanediol, 1,6-hexanediol, 1,9-nonanediol, 1,10-decanediol, 1,11-undecanediol, 1,12-dodecanediol, 1,4-cyclohexanediol, and 1,4-cyclohexanedimethanol; preferably, ethanediol, 1,3-propanediol, or 1,4-butanediol.

Most preferably, when the component a1) is adipic acid or the ester derivative thereof or the anhydride derivative thereof, the component 2) is terephthalic acid or the ester derivative thereof or the anhydride derivative thereof; and the second component B is a combination of 1,4-butanediol.

Based on the total molar weight of the first component A, the semi-aromatic polyester of the present invention includes a third component C of 0.01-5.0 mol%, and a fourth component D of 0.01-5.0 mol%.

The third component C is selected from one or more of tartaric acid, citric acid, malic acid, trimethylolpropane, trimethylolethane, pentaerythritol, polyether triol, glycerol, 1,3,5-trimesic acid, 1,2,4-trimesic acid, 1,2,4-trimellitic anhydride, 1,2,4,5-prenitic acid or pyromellitic dianhydride; preferably, trimethylolpropane, pentaerythritol, or glycerol.

The fourth component D is a chain extender; the chain extender is one or a mixture of several of isocyanate, isocyanurate, peroxide, epoxide, oxazoline, oxazine, lactam, carbodiimide or polycarbodiimide which contains two or more functional groups.

The isocyanate which contains two or more functional groups may be an aromatic isocyanate or an aliphatic isocyanate; preferably, an aromatic diisocyanate or an aliphatic diisocyanate. Preferably, the aromatic diisocyanate is toluene 2,4-diisocyanate, toluene 2,6-diisocyanate, diphenylmethane 2,2'-diisocyanate, diphenylmethane 2,4'-diisocyanate, diphenylmethane 4,4'-diisocyanate, naphthalene 1,5-diisocyanate or xylene diisocyanate.

More preferably, the aromatic diisocyanate is diphenylmethane 2,2'-diisocyanate, diphenylmethane 2,4'-diisocyanate or diphenylmethane 4,4'-diisocyanate.

The isocyanate which contains two or more functional groups may be further tri(4-isocyanato-phenyl) methane with three rings.

Preferably, the aliphatic diisocyanate is preferably any linear-chain or branched-chain alkylene diisocyanate or cycloalkylene diisocyanate containing 2-20 carbon atoms, more preferably, containing 3-12 carbon atoms. The aliphatic diisocyanate may be hexamethylene 1, 6-diisocyanate, isophorone diisocyanate or methylene di(4-isocyanato-cyclohexane); most preferably, hexamethylene 1, 6-diisocyanate, or isophorone diisocyanate.

Preferably, the isocyanurate which contains two or more functional groups is an aliphatic isocyanurate, and derived from alkylene diisocyanate or cycloalkylene diisocyanate having 2-20 carbon atoms, preferably, 3-12 carbon atoms, for example, isophorone diisocyanate or methylene di(4-isocyanato-cyclohexane). The alkylene diisocyanate may be a linear-chain or branched-chain compound; especially preferably, an isocyanurate based on a cyclic trimer, a pentamer or higher oligomer of n-hexamethylene diisocyanate, for example, hexamethylene 1,6-diisocyanate.

Preferably, the peroxide which contains two or more functional groups is preferably, benzoyl peroxide, 1,1-di(tert-butylperoxo)-3,3,5-trimethylcyclohexane, 1,1-di(tert-butylperoxo)methylcyclododecane, n-butyl 4,4-di(butylperoxo)pentanoate, dicumyl peroxide, tert-butyl peroxybenzoate, dibutyl peroxide, $\alpha,\alpha$-di(tert-butyl peroxo)diisopropyl benzene, 2,5-dimethyl-2,5-di(tert-butyl peroxo)hexane, 2,5-dimethyl-2,5-di(tert-butyl peroxo)hex-3-alkyne or tert-butyl cumene peroxide.

Preferably, the epoxide which contains two or more functional groups is preferably, hydroquinone, diglycidyl ether, resorcinol diglycidyl ether, 1,6-hexanediol diglycidyl ether, hydrogenated bisphenol A diglycidyl ether, diglycidyl terephthalate, diglycidyl tetrahydrophthalate, diglycidyl hexahydrophthalate, dimethyl diglycidyl phthalate, phenylene diglycidyl ether, ethylidene diglycidyl ether, trimethylene diglycidyl ether, tetramethylene diglycidyl ether, hexamethylene diglycidyl ether, sorbitol diglycidyl ether, polyglycerol polyglycidyl ether, pentaerythritol polyglycidyl ether, diglycerol polyglycidyl ether, glycerin polyglycidyl ether, trimethylolpropane polyglycidyl ether, resorcinol diglycidyl ether, neopentyl glycol diglycidyl ether, glycol diglycidyl ether, diglycol diglycidyl ether, polyethylene glycol diglycidyl ether, propylene glycol diglycidyl ether, dipropylene glycol diglycidyl ether, polypropylene glycol diglycidyl ether, or poly1,4-butanediol diglycidyl ether.

The epoxide which contains two or more functional groups is further preferably a copolymer containing an epoxy group and based on styrene, acrylate and/or methacrylate; the epoxy group is preferably glycidyl methacrylate. It has been proved that a favorable compound is a copolymer in which a ratio of the glycidyl methacrylate is higher than 20 wt%, more preferably, higher than 30 wt%, and further preferably, higher than 50 wt%. In these polymers, the epoxide equivalent weight is preferably 150-3000 g/equivalent, more preferably, 200-500 g/equivalent. The weight-average molecular weight (Mw) of the polymer is preferably 2000-25000, more preferably 3000-8000. The number-average molecular weight (Mn) of the polymer is preferably 400-6000, more preferably 1000-4000. Polydispersity index (Q=Mw/Mn) is preferably 1.5-5.

The oxazoline or oxazine which contains two or more functional groups is preferably dioxazoline or dioxazine; the bridging portion thereof is a single bond, or $(CH_2)z$-alkylene, in which z=2, 3 or 4, for example, methylene, et-1,2-diyl, propyl-1,3-diyl, or propyl-1,2-diyl, or phenylene. Specifically, the dioxazoline is 2,2'-di(2-oxazoline), di(2-oxazolinyl)methane, 1,2-di(oxazolinyl)ethane, 1,3-di(2-oxazolinyl)propane, 1,4-di(2-oxazolinyl)butane, 2,2'-di(2-oxazoline), 2,2'-di(4-methyl-2-oxazoline), 2,2'-di(4,4'-dimethyl-2-oxazoline), 2,2'-di(4-ethyl-2-oxazoline), 2,2'-di(4,4'-diethyl-2-oxazoline), 2,2'-di(4-propyl-2-oxazoline), 2,2'-di(4-butyl-2-oxazoline), 2,2'-di(4-hexyl-2-oxazoline), 2,2'-di(4-phenyl-2-oxazoline), 2,2'-di(4-cyclohexyl-2-oxazoline), 2,2'-di(4-benzyl-2-oxazoline), 2,2'-p-phenylene-di(4-methyl-2-oxazoline), 2,2'-p-phenylene-di(4,4'-dimethyl-2-oxazoline), 2,2'-m-phenylene-di(4-methyl-2-oxazoline), 2,2'-m-phenylene-di(4,4'-dimethyl-2-oxazoline), 2,2'-hexamethylene-di(2-oxazoline), 2,2'-octamethylene-di(2-oxazoline), 2,2'-decamethylene-di(2-oxazoline), 2,2'-ethylidene-di(4-methyl-2-oxazoline), 2,2'-tetramethylene-di(4,4'-dimethyl-2-oxazoline), 2,2'-9,9'-diphenoxyethane-di(2-oxazoline), 2,2'-cyclohexylidene-di(2-oxazoline), or 2,2'-diphenylene(2-oxazoline).

More preferably, the dioxazoline is 1,4-di(2-oxazolinyl)benzene, 1,2-di(2-oxazolinyl)benzene, or 1,3-di(2-oxazolinyl)benzene.

Specifically, dioxazine is 2,2'-di(2-dioxazine), di(2-dioxazinyl)methane, 1,2-di(2-dioxazinyl)ethane, 1,3-di(2-dioxazinyl)propane, 1,4-di(2-dioxazinyl)butane, 1,4-di(2-dioxazinyl)benzene, 1,2-di(2-dioxazinyl)benzene, or 1,3-di(2-dioxazinyl)benzene.

The carbodiimide or the polycarbodiimide which contains two or more functional groups is preferably N,N'-di-2,6-diisopropylphenyl carbodiimide, N,N'-di-o-tolyl carbodiimide, N,N'-diphenyl carbodiimide, N,N'-dioctyldecyl carbodiimide, N,N'-di-2,6-dimethylphenyl carbodiimide, N-tolyl-N'-cyclohexyl carbodiimide, N,N'-di-2,6-di-tert-butylphenyl carbodiimide, N-tolyl-N'-phenyl carbodiimide, N,N'-di-p-nitrophenyl carbodiimide, N,N'-dip-aminophenyl carbodiimide, N,N'-di-p-hydroxylphenyl carbodiimide, N,N'-dicyclohexylcarbodiimide, N,N'-di-p-tolyl carbodiimide, p-phenylene-bis-di-o-tolyl carbodiimide, p-phenylene-bis-dicyclohexyl carbodiimide, hexamethylene-bis-dicyclohexyl carbodiimide, 4,4'-dicyclohexyl methane carbodiimide, ethylidene-bis-diphenyl carbodiimide, N,N'-tolyl-carbodiimide, N-octadecyl-N'-phenyl carbodiimide, N-benzyl-N'-phenyl carbodiimide, N-octadecyl-N'-tolyl carbodiimide, N-cyclohexyl-N'-tolyl carbodiimide, N-phenyl-N'-tolyl carbodiimide, N-benzyl-N'-tolyl carbodiimide, N,N'-di-o-ethylphenyl carbodiimide, N,N'-di-p-ethylphenyl carbodiimide, N,N'-di-o-isopropylphenyl carbodiimide, N,N'-di-p-isopropylphenyl carbodiimide, N,N'-di-o-isobutylphenyl carbodiimide, N,N'-di-p-isobutylphenyl carbodiimide, N,N'-di-2,6-diethylphenyl carbodiimide, N,N'-di-2-ethyl-6-isopropylphenyl carbodiimide, N,N'-di-2-isobutyl-6-isopropylphenyl carbodiimide, N,N'-di-2,4,6-trimethylphenyl carbodiimide, N,N'-di-2,4,6-triisopropylphenyl carbodiimide, N,N'-di-2,4,6-triisobutylphenyl carbodiimide, diisopropyl carbodiimide, dimethyl carbodiimide, diisobutyl carbodiimide, dioctyl carbodiimide, tert-butylisopropyl carbodiimide, di-β-naphthyl carbodiimide or di-tert-butyl carbodiimide.

Preferably, the semi-aromatic polyester has a viscosity number of 150-350 ml/g; the viscosity number is determined in a phenol/o-dichlorobenzene solution having a weight ratio of 1:1 and a thermostatic water bath at 25±0.05°C in accordance with the regulations of GB/T 17931-1999.

Preferably, the semi-aromatic polyester has a carboxyl group content of 5-60 mmol/kg, preferably, 10-30 mmol/kg.

The present invention further provides a preparation method of the above semi-aromatic polyester, including the following steps:

step S1, adding the a1 in the first component A and the second component B to a slurry preparation kettle by a proportion, and transporting the prepared slurry to a first esterification reactor, then adding the second component B returned and a catalyst to the first esterification reactor from another pathway, and performing esterification reaction for 2-4 h at 150-200°C and 30-110 kPa to obtain an esterified product Ba1; adding the a2 in the first component A and the second component B to a slurry preparation kettle, and transporting the prepared slurry to a second esterification reactor, then adding the second component B returned and a catalyst to the second esterification reactor from another pathway, and performing esterification reaction for 2-4 h at 200-250°C and 30-110 kPa to obtain an esterified product Ba2;

step S2, performing primary polycondensation on the esterified product Ba1 in the step S1 at a reaction temperature of 170-220°C and a pressure of 1-10 kPa; performing primary polycondensation on the esterified product Ba2 in the step S1 at a reaction temperature of 230-270°C and a pressure of 1-10 kPa; performing the primary polycondensation on the esterified products Ba1 and Ba2 independently and respectively until each reaction product has a viscosity number of 15-60 ml/g, where the viscosity number is determined in a phenol/o-dichlorobenzene solution having a weight ratio of 1:1 and a thermostatic water bath at 25±0.05°C in accordance with the regulations of GB/T 17931-1999, thus respectively obtaining products Pre-Ba1 and Pre-Ba2 of the primary polycondensation;

step S3, transferring the product Pre-Ba1 of the primary polycondensation obtained in the step S2 to a first final-polycondensation kettle at a reaction temperature of 180-230°C and a pressure of 10-500 Pa; transferring the product Pre-Ba2 of the primary polycondensation obtained in the step S2 to a second final-polycondensation kettle at a reaction temperature of 220-270°C and a pressure of 10-500 Pa; performing polycondensation on the products Pre-Ba1 and Pre-Ba2 independently and respectively until each reaction product has a viscosity number of 50-180 ml/g, where the viscosity number is determined in a phenol/o-dichlorobenzene solution having a weight ratio of 1:1 and a thermostatic water bath at 25±0.05°C in accordance with the regulations of GB/T 17931-1999, thus respectively obtaining the final-polycondensation products Poly-Bal and Poly-Ba2;

step S4, performing mixed reaction on the final-polycondensation products Poly-Bal and Poly-Ba2 obtained in the step S3 in a mixer to obtain the semi-aromatic polyester such that the semi-aromatic polyester has a viscosity number of 150-300 ml/g, where the viscosity number is determined in a phenol/o-dichlorobenzene solution having a weight ratio of 1:1 and a thermostatic water bath at 25±0.05°C in accordance with the regulations of GB/T 17931-1999.

Preferably, in the step S1, a catalyst based on 0.001-1% weight of the final semi-aromatic polyester is added in the preparation of the Ba2 esterified product. Preferably, the catalyst is added by 0.02-0.2% weight of the final semi-aromatic polyester. The adding amount of the catalyst is controlled to make the subsequent machining process more stable. Further, the catalyst may be a tin compound, an antimony compound, a cobalt compound, a lead compound, a zinc compound, an aluminium compound or a titanium compound; more preferably, a zinc compound, an aluminium compound or a titanium compound, more preferably, a titanium compound. Relative to other compounds, the titanium compound, for example, tetrabutyl ortho-titanate or tetraisopropyl ortho-titanate has the advantage of low toxicity of residues on the product or downstream products. Such a property is rather important in biodegradable polyurethanes because the compound will directly enter into the environment in a form of a composting bag or cover film.

The pressure in the process of the present invention is an absolute pressure (AP).

In the step S1, the total molar weight of the second component B is usually 1.1-3.0 times the first component A; the excessive amount of the second component B is recovered by a purification equipment (usually a rectifying tower) connected with an esterification reactor into the esterification reactor. The recovery amount of the second component B is usually 20-50 wt% of the amount of the fresh second component B.

In the step S2, the reaction temperature is more preferably 180-200°C and the reaction pressure is more preferably 2-5 kPa during the preparation of a Pre-Ba1 prepolymer.

In the step S2, the remaining amount of catalyst in the step S1 may be added to the step S2 if necessary during the preparation of a Pre-Ba2 prepolymer. The reaction temperature is more preferably 240-260°C and the reaction pressure is more preferably 2-5 kPa.

In the step S2, when Pre-Ba1 and Pre-Ba2 are prepared respectively, the general reaction time is 2-5 h. Under normal conditions, the reaction products Pre-Ba1 and Pre-Ba2 of the primary polycondensation may be produced after the reaction time; the reaction products have a viscosity number of 15-60 ml/g, and the viscosity number is determined in a phenol/o-dichlorobenzene solution having a weight ratio of 1:1 and a thermostatic water bath at 25±0.05°C in accordance with the regulations of GB/T 17931-1999. The reaction products Pre-Ba1 and Pre-Ba2 of the primary polycondensation after the S2 reaction generally have a carboxyl group content of 10-60 mmol/kg.

In the steps of the S3 polycondensation, a passivator may be mixed with a pre-polyester if necessary. The available passivator is usually a compound of phosphorus, including phosphoric acid, phosphorous acid and esters thereof. Based on the weight of the final polyester, the passivator usually has an amount of 0.001-0.1 wt%, preferably 0.01-0.05 wt%.

In the step S3, the reaction temperature is more preferably 190-220°C and the reaction pressure is more preferably 50-200 Pa during the preparation of the Pre-Ba1 prepolymer.

In the step S3, the reaction temperature is more preferably 240-260°C and the reaction pressure is more preferably 20-100 Pa during the preparation of the Pre-Ba2 prepolymer.

In the step S3, the polycondensation time is preferably 1-5 h, and more preferably 2-4 h. The produced polyesters Poly-Bal and Poly-Ba2 have a viscosity number of 50-180 ml/g; the viscosity number is determined in a phenol/o-dichlorobenzene solution having a weight ratio of 1:1 and a thermostatic water bath at 25±0.05°C in accordance with the regulations of GB/T 17931-1999. Moreover, the polyesters Poly-Bal and Poly-Ba2 after the S3 reaction usually have a carboxyl group content of 5-60 mmol/kg, and more preferably, a carboxyl group content of 10-30 mmol/kg.

In the step S4, Poly-Bal and Poly-Ba2 are mixed in a mixer; the mixer includes a raw material injection system, a temperature control system, a high-shear homogenization pump, and a homogenizer; the mixer has a temperature range of 200°C-280°C, preferably, 240°C-260°C; the retention time of the Poly-Bal and Poly-Ba2 in the mixer is 1-4 h, and preferably 1.5-2 h. The reaction product obtained after through the mixer has a viscosity number of 150-300 ml/g, and the viscosity number is determined in a phenol/o-dichlorobenzene solution having a weight ratio of 1:1 and a thermostatic water bath at 25±0.05°C in accordance with the regulations of GB/T 17931-1999.

Preferably, the present invention further includes a step 5 if necessary: adding the semi-aromatic polyester obtained in the step S4 to the fourth component D for chain propagation reaction at a reaction temperature of 200-270°C until the reaction product has a viscosity number of 150-350 ml/g, where the viscosity number is determined in a phenol/o-dichlorobenzene solution having a weight ratio of 1:1 and a thermostatic water bath at 25±0.05°C in accordance with the regulations of GB/T 17931-1999, and the reaction retention time is 0.5-15 min, and preferably, 2-5 min.

In the process of the present invention, the aliphatic diacid and aromatic diacid are independently subjected to polymerization reaction respectively before the chain extension stage, and the aliphatic polyester oligomer and aromatic polyester oligomer are not mixed until the chain extension stage. The prepared semi-aromatic polyester has a double bond content of 0.55-4.5 mmol/kg such that the semi-aromatic polyester has better melting heat retention stability and fine color.

The double bond content in the semi-aromatic polyester of the present invention may be further controlled within 0.55-4.5 mmol/kg by other processes, for example, by the direct copolymerization of double bond-containing compounds (e.g., undecylenic acid) during the synthesis.

The present invention further provides an application of the above semi-aromatic polyester in preparing a compostable degradation product, and the compostable degradation product may be a fiber, a film or a container.

The present invention further provides a semi-aromatic polyester molding composition, including the following components by weight percentage:

5-95 wt% of the above semi-aromatic polyester;
5-95 wt% of an additive and/or other polymers;
0-70 wt% of a reinforcing material and/or a filler.

As a specific option, the additive and/or other polymers may be, at least one or more of components selected from an aliphatic polyester, polycaprolactone, starch, cellulose, poly-hydroxyalkanoate and polylactic acid.

Compared with the prior art, the prevent invention has the following beneficial effects:

The present invention discloses a semi-aromatic polyester. The semi-aromatic polyester has a specific double bond content. Compared with the existing semi-aromatic polyesters, the semi-aromatic polyester of the present invention has better melting heat retention stability and fine color.

## BRIEF DESCRIPTION OF DRAWINGS

FIG. 1 is a $^1$H NMR diagram of a semi-aromatic polyester obtained in Example 1;
FIG. 2 is an enlarged diagram showing a portion of double bond peaks in the $^1$H NMR spectrum of the semi-aromatic polyester obtained in Example 1.

## DETAILED DESCRIPTION OF EMBODIMENTS

Raw materials, reagents and solvents used in the present invention are commercial available without any treatment, unless otherwise stated. The present invention will be further specifically described with reference to the examples. The embodiments of the present invention are not limited to the following examples. Moreover, the wording "part" and "%" in the description herein respectively represent "part by mass" and "mass%".

Performance test method:

Test method for the double bond content in the semi-aromatic polyester (PBAT obtained by reacting terephthalic acid with adipic acid and 1,4-butanediol in Example 1 was set as an example):
20 mg of the semi-aromatic polyester samples were taken and dissolved into 0.6 ml of deuterated chloroform, and then

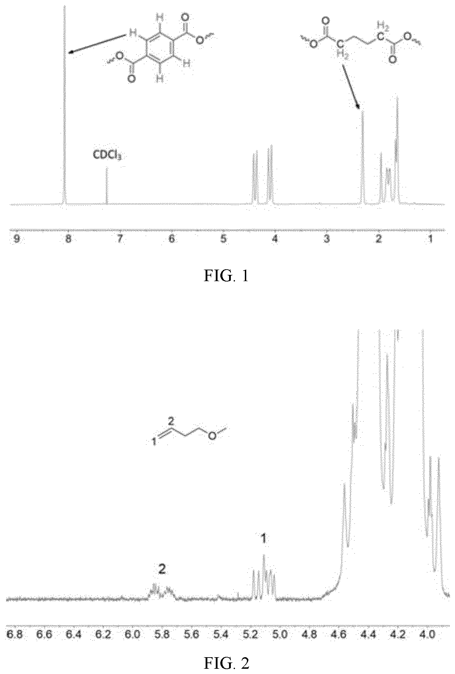

$^1$H NMR was determined by an AV 500 nuclear magnetic resonance spectrometer from Bruker to calibrate a chloroform solvent peak of 7.26 ppm. As can be seen from the Reference (J. Appl. Polym. Sci. 2007, 104(4): 2643-2649.), 4 hydrogen atoms on the benzene ring in the repeating unit of terephthalic acid appeared nearby the 8.10 ppm; and 4 hydrogen atoms on the two $CH_2$ units adjacent to the carbonyl group in the repeating unit of adipic acid appeared nearby the 2.33 ppm, as shown in FIG. 1. The molar weight of the diacid component may be represented by the integral areas ($I_T$ and $I_A$) of the two peaks at 8.10 ppm and 2.33 ppm:

$$\text{molar weight of terephthalic acid in PBAT} = I_T/(I_T+I_A)\times 100\%$$

$$\text{molar weight of adipic acid in PBAT} = I_A/(I_T+I_A)\times 100\%$$

As can be seen from the $^1$H NMR spectrum of 3-butene-1-ol (CAS: 627-27-0) in references and SDBS database, the peak 1 at 5.0-5.2 ppm is the peak of $CH_2$=CH- of the two hydrogen atoms on the methylene at the terminal ends of the double bond; the peak 2 at 5.7-5.9 ppm is the peak of $CH_2$=C$H$- of the hydrogen atoms on the methine at the terminal ends of the double bond, as shown in FIG. 2.

As the semi-aromatic polyester has a lower double bond content, the peak of the two hydrogen atoms on the methylene at the terminal ends of the double bond are used as the calculation basis to obtain a calculation formula of the double bond content C (unit: mmol/kg):

$$C = \frac{\frac{I_1}{2}}{\frac{I_T + I_A}{4} \times M_0} \times 10^6 = \frac{2I_1}{(I_T + I_A) \times M_0} \times 10^6$$

in which,

$I_1$ is an integral area of a $CH_2$=CH- peak of the two hydrogen atoms on the methylene at terminal ends of the double bond;

$I_T$ is an integral area of the four hydrogen atoms on the benzene ring of the terephthalic acid repeating unit;

$I_A$ is an integral area of the four hydrogen atoms on the two -$CH_2$- connected with the carbonyl group on the adipic acid repeating unit;

$M_0$ is an average molecular weight of a PBAT single repeating unit of the semi-aromatic polyester;

for example, when the molar ratio of terephthalic acid to adipic acid in Example 1 is 0.467:0.533, the average molecular weight $M_0$ of the repeating unit is: $M_0$=0.467*MPBT+0.533*MPBA. If MPBT is a molecular weight of 220 g/mol of the PBT repeating unit and MPBA is a molecular weight of 200 g/mol of the PBA repeating unit, the PBAT repeating unit in the semi-aromatic polyester of Example 1 is $M_0$=209 g/mol.

The viscosity number of the semi-aromatic polyester is:

determined in a phenol/o-dichlorobenzene solution having a weight ratio of 1:1 and a thermostatic water bath at 25±0.05°C in accordance with the regulations of GB/T 17931-1999; the sample concentration is 5 mg/ml.

Carboxyl group content:

An acid value AN (mg KOH/g) was firstly determined according to DIN EN 12634 in October 1998, and then the carboxyl group content (mmol/kg)=AN/56$\times 10^3$. The solvent mixture used included 1 part by volume of DMSO, 8 parts by volume of isopropanol and 7 parts by volume of toluene. The semi-aromatic polyester sample was heated up to 70°C such that all the polymers were dissolved into a clear solution; the solution temperature was kept within 60-70°C during titration to avoid the precipitation of the polymers. Tetrabutyl ammonium hydroxide is used as a titrant to avoid the highly toxic tetramethylammonium hydroxide. Meanwhile, to prevent the mixed solvent from absorbing $CO_2$ in the air to affect the volume of the titrant consumed by the blank solvent, when the volume of the titrant consumed by the blank solvent was determined, the blank solvent was heated up to a constant temperature of 70°C for 0.5 h, then the blank solvent was titrated with an alkali solution immediately, thus preventing the heated blank solvent from further absorbing $CO_2$ in the air.

Test on the melting heat retention stability:

The melt mass flow rate (MFR) of the semi-aromatic polyester was tested by reference to the Part 1: Standard Method of the GB/T 3682.1-2018 Determination of the Melt Mass Flow Rate (MFR) and of Melt Volume Flow Rate (MVR) of Thermoplastic Plastics. The test temperature was 190 °C and load was 2.16 kg. A melt index was obtained at a melt time of 5 min, denoted as $MFR_0$; and a melt index was obtained at a melt time of 20 min, denoted as MFRi. A retention rate of the heat retention melt index R=$MFR_0$/$MFR_1 \times 100\%$ was obtained. The lower the R value is, the worse the heat retention stability is.

Color of the semi-aromatic polyester:

Pelletized and dried samples were taken and tested according to the GB/T 14190-2017 5.5.2 Method B (Drying Method). L, a and b values of the Hunter Lab color system were tested to define a Hunter whiteness:

$$WH= 100-[(100-L)^2+a^2+b^2]^{1/2}$$

The greater the Hunter whiteness is, the better the sample color is.

Example 1:

Step S1, 437 kg/h adipic acid and 404 kg/h 1,4-butanediol were continuously added to a slurry preparation kettle, and the prepared slurry was continuously fed into a first esterification reactor, and another pathway of 1,4-butanediol from the bottom of the process tower had a flow rate of 135 kg/h, meanwhile, 0.60 kg/h glycerin and 0.224 kg/h titanium tetrabutoxide were added to control a pressure of the reactor to be 40 kPa (absolute pressure) and a temperature to be 190°C, and the retention time was 2-4 h; water, tetrahydrofuran and butanediol generated by the reaction were removed to obtain an esterified product Ba1;
437 kg/h terephthalic acid and 356 kg/h 1,4-butanediol were continuously added to a slurry preparation kettle, and the prepared slurry was continuously fed into a second esterification reactor, and another pathway of 1,4-butanediol from the bottom of the process tower had a flow rate of 119 kg/h, meanwhile, 0.53 kg/h glycerin and 0.406 kg/h titanium tetrabutoxide were added to control a pressure of the reactor to be 40 kPa (absolute pressure) and a temperature to be 240°C, and the retention time was 2-4 h; water, tetrahydrofuran and butanediol generated by the reaction were removed to obtain an esterified product Ba2;
step S2, the esterified product Ba1 was transferred to a first pre-polycondensation reaction kettle, and meanwhile 0.096 kg/h titanium tetrabutoxide and 0.245 kg/h triphenyl phosphate were added; the reaction kettle had a temperature of 200°C, a pressure of 4 kPa and a retention time of 2-3 h; the excessive butanediol was moved out; at this time, the reaction product Pre-Ba1 had a viscosity number of 44 ml/g; the viscosity number was determined in a phenol/o-dichlorobenzene solution having a weight ratio of 1:1 and a thermostatic water bath at 25±0.05°C in accordance with the regulations of GB/T 17931-1999;
the esterified product Ba2 was transferred to a second pre-polycondensation reaction kettle, and meanwhile 0.174 kg/h titanium tetrabutoxide and 0.44 kg/h triphenyl phosphate were added; the reaction kettle had a temperature of 250°C, a pressure of 2 kPa and a retention time of 2-3 h; the excessive butanediol was moved out; at this time, the reaction product Pre-Ba2 had a viscosity number of 27 ml/g; the viscosity number was determined in a phenol/o-dichlorobenzene solution having a weight ratio of 1:1 and a thermostatic water bath at 25±0.05°C in accordance with the regulations of GB/T 17931-1999;
step S3, the prepolymer Pre-Ba1 was fed into a first final-polycondensation kettle by a melt pump; the first final-polycondensation kettle had a temperature of 220°C, a pressure of 120 Pa and a retention time of 2-4 h. At this time, the reaction product Poly-Bal had a viscosity number of 138 ml/g and the viscosity number was determined in a phenol/o-dichlorobenzene solution having a weight ratio of 1:1 and a thermostatic water bath at 25±0.05°C in accordance with the regulations of GB/T 17931-1999;
the prepolymer Pre-Ba2 was fed into a second final-polycondensation kettle by a melt pump; the second final-polycondensation kettle had a temperature of 250°C, a pressure of 20 Pa and a retention time of 2-4 h. At this time, the reaction product Poly-Ba2 had a viscosity number of 115 ml/g and the viscosity number was determined in a phenol/o-dichlorobenzene solution having a weight ratio of 1:1 and a thermostatic water bath at 25±0.05°C in accordance with the regulations of GB/T 17931-1999;
step S4, the two final-polycondensation products Poly-Bal and Poly-Ba2 were continuously fed into a mixer, and the mixer had a temperature of 250°C and a retention time of 1.5 h. Afterwards, the obtained polyester was brought into a twin-screw extruder, and meanwhile, 5.2 kg/h hexamethylene diisocyanate (HDI) was metered and added, and temperature was set as 240°C. 3 min later after the retention time, the polyester was granulated by an underwater granulator, and dried to obtain the final polyester product.

Example 2:

Step S1, 605 kg/h decanedioic acid and 404 kg/h 1,4-butanediol were continuously added to a slurry preparation kettle, and the prepared slurry was continuously fed into a first esterification reactor, and another pathway of 1,4-butanediol from the bottom of the process tower had a flow rate of 135 kg/h, meanwhile, 0.60 kg/h glycerin and 0.224 kg/h titanium tetrabutoxide were added to control a pressure of the reactor to be 40 kPa (absolute pressure) and a temperature to be 180°C, and the retention time was 2-4 h; water, tetrahydrofuran and butanediol generated by the reaction were removed to obtain an esterified product Ba1;

437 kg/h terephthalic acid and 356 kg/h 1,4-butanediol were continuously added to a slurry preparation kettle, and the prepared slurry was continuously fed into a second esterification reactor, and another pathway of 1,4-butanediol from the bottom of the process tower had a flow rate of 119 kg/h, meanwhile, 0.53 kg/h glycerin and 0.406 kg/h titanium tetrabutoxide were added to control a pressure of the reactor to be 40 kPa (absolute pressure) and a temperature to be 240°C, and the retention time was 2-4 h; water, tetrahydrofuran and butanediol generated by the reaction were removed to obtain an esterified product Ba2;

step S2, the esterified product Ba1 was transferred to a first pre-polycondensation reaction kettle, and meanwhile 0.096 kg/h titanium tetrabutoxide and 0.245 kg/h triphenyl phosphate were added; the reaction kettle had a temperature of 190°C, a pressure of 4 kPa and a retention time of 2-3 h; the excessive butanediol was moved out; at this time, the reaction product Pre-Ba1 had a viscosity number of 46 ml/g; the viscosity number was determined in a phenol/o-dichlorobenzene solution having a weight ratio of 1:1 and a thermostatic water bath at 25±0.05°C in accordance with the regulations of GB/T 17931-1999;

the esterified product Ba2 was transferred to a second pre-polycondensation reaction kettle, and meanwhile 0.174 kg/h titanium tetrabutoxide and 0.44 kg/h triphenyl phosphate were added; the reaction kettle had a temperature of 250°C, a pressure of 2 kPa and a retention time of 2-3 h; the excessive butanediol was moved out; at this time, the reaction product Pre-Ba2 had a viscosity number of 29 ml/g; the viscosity number was determined in a phenol/o-dichlorobenzene solution having a weight ratio of 1:1 and a thermostatic water bath at 25±0.05°C in accordance with the regulations of GB/T 17931-1999;

step S3, the prepolymer Pre-Ba1 was fed into a first final-polycondensation kettle by a melt pump; the first final-polycondensation kettle had a temperature of 210°C, a pressure of 120 Pa and a retention time of 2-4 h. At this time, the reaction product Poly-Bal had a viscosity number of 147 ml/g and the viscosity number was determined in a phenol/o-dichlorobenzene solution having a weight ratio of 1:1 and a thermostatic water bath at 25±0.05°C in accordance with the regulations of GB/T 17931-1999;

the prepolymer Pre-Ba2 was fed into a second final-polycondensation kettle by a melt pump; the second final-polycondensation kettle had a temperature of 250°C, a pressure of 20 Pa and a retention time of 2-4 h. At this time, the reaction product Poly-Ba2 had a viscosity number of 119 ml/g and the viscosity number was determined in a phenol/o-dichlorobenzene solution having a weight ratio of 1:1 and a thermostatic water bath at 25±0.05°C in accordance with the regulations of GB/T 17931-1999;

step S4, the two final-polycondensation products Poly-Bal and Poly-Ba2 were continuously fed into a mixer, and the mixer had a temperature of 250°C and a retention time of 1.4 h. Afterwards, the obtained polyester was brought into a twin-screw extruder, and meanwhile, 5.2 kg/h hexamethylene diisocyanate (HDI) was metered and added, and temperature was set as 240°C. 3 min later after the retention time, the polyester was granulated by an underwater granulator, and dried to obtain the final polyester product.

Example 3:

Step S1, 437 kg/h adipic acid and 404 kg/h 1,4-butanediol were continuously added to a slurry preparation kettle, and the prepared slurry was continuously fed into a first esterification reactor, and another pathway of 1,4-butanediol from the bottom of the process tower had a flow rate of 135 kg/h, meanwhile, 0.88 kg/h trimethylolpropane (TMP) and 0.224 kg/h titanium tetrabutoxide were added to control a pressure of the reactor to be 40 kPa (absolute pressure) and a temperature to be 190°C, and the retention time was 2-4 h; water, tetrahydrofuran and butanediol generated by the reaction were removed to obtain an esterified product Ba1;

437 kg/h terephthalic acid and 356 kg/h 1,4-butanediol were continuously added to a slurry preparation kettle, and the prepared slurry was continuously fed into a second esterification reactor, and another pathway of 1,4-butanediol from the bottom of the process tower had a flow rate of 119 kg/h, meanwhile, 0.772 kg/h trimethylolpropane and 0.406 kg/h titanium tetrabutoxide were added to control a pressure of the reactor to be 40 kPa (absolute pressure) and a temperature to be 240°C, and the retention time was 2-4 h; water, tetrahydrofuran and butanediol generated by the reaction were removed to obtain an esterified product Ba2;

step S2, the esterified product Ba1 was transferred to a first pre-polycondensation reaction kettle, and meanwhile 0.096 kg/h titanium tetrabutoxide and 0.245 kg/h triphenyl phosphate were added; the reaction kettle had a temperature of 200°C, a pressure of 4 kPa and a retention time of 2-3 h; the excessive butanediol was moved out; at this time, the reaction product Pre-Ba1 had a viscosity number of 42 ml/g; the viscosity number was determined in a phenol/o-dichlorobenzene solution having a weight ratio of 1:1 and a thermostatic water bath at $25\pm0.05$°C in accordance with the regulations of GB/T 17931-1999;

the esterified product Ba2 was transferred to a second pre-polycondensation reaction kettle, and meanwhile 0.174 kg/h titanium tetrabutoxide and 0.44 kg/h triphenyl phosphate were added; the reaction kettle had a temperature of 250°C, a pressure of 2 kPa and a retention time of 2-3 h; the excessive butanediol was moved out; at this time, the reaction product Pre-Ba2 had a viscosity number of 25 ml/g; the viscosity number was determined in a phenol/o-dichlorobenzene solution having a weight ratio of 1:1 and a thermostatic water bath at $25\pm0.05$°C in accordance with the regulations of GB/T 17931-1999;

step S3, the prepolymer Pre-Ba1 was fed into a first final-polycondensation kettle by a melt pump; the first final-polycondensation kettle had a temperature of 220°C, a pressure of 120 Pa and a retention time of 2-4 h. At this time, the reaction product Poly-Bal had a viscosity number of 129 ml/g and the viscosity number was determined in a phenol/o-dichlorobenzene solution having a weight ratio of 1:1 and a thermostatic water bath at $25\pm0.05$°C in accordance with the regulations of GB/T 17931-1999;

the prepolymer Pre-Ba2 was fed into a second final-polycondensation kettle by a melt pump; the second final-polycondensation kettle had a temperature of 250°C, a pressure of 20 Pa and a retention time of 2-4 h. At this time, the reaction product Poly-Ba2 had a viscosity number of 111 ml/g and the viscosity number was determined in a phenol/o-dichlorobenzene solution having a weight ratio of 1:1 and a thermostatic water bath at $25\pm0.05$°C in accordance with the regulations of GB/T 17931-1999;

step S4, the two final-polycondensation products Poly-Bal and Poly-Ba2 were continuously fed into a mixer, and the mixer had a temperature of 250°C and a retention time of 1.5 h. Afterwards, the obtained polyester was brought into a twin-screw extruder, and meanwhile, 5.2 kg/h hexamethylene diisocyanate (HDI) was metered and added, and temperature was set as 240°C. 3 min later after the retention time, the polyester was granulated by an underwater granulator, and dried to obtain the final polyester product.

Example 4:

Step S1, 437 kg/h adipic acid and 404 kg/h 1,4-butanediol were continuously added to a slurry preparation kettle, and the prepared slurry was continuously fed into a first esterification reactor, and another pathway of 1,4-butanediol from the bottom of the process tower had a flow rate of 135 kg/h, meanwhile, 0.224 kg/h titanium tetrabutoxide was added to control a pressure of the reactor to be 40 kPa (absolute pressure) and a temperature to be 190°C, and the retention time was 2-4 h; water, tetrahydrofuran and butanediol generated by the reaction were removed to obtain an esterified product Ba1;

437 kg/h terephthalic acid and 356 kg/h 1,4-butanediol were continuously added to a slurry preparation kettle, and the prepared slurry was continuously fed into a second esterification reactor, and another pathway of 1,4-butanediol from the bottom of the process tower had a flow rate of 119 kg/h, meanwhile, 0.406 kg/h titanium tetrabutoxide was added to control a pressure of the reactor to be 40 kPa (absolute pressure) and a temperature to be 240°C, and the retention time was 2-4 h; water, tetrahydrofuran and butanediol generated by the reaction were removed to obtain an esterified product Ba2;

step S2, the esterified product Ba1 was transferred to a first pre-polycondensation reaction kettle, and meanwhile 0.096 kg/h titanium tetrabutoxide and 0.245 kg/h triphenyl phosphate were added; the reaction kettle had a temperature of 200°C, a pressure of 4 kPa and a retention time of 2-3 h; the excessive butanediol was moved out; at this time, the reaction product Pre-Ba1 had a viscosity number of 49 ml/g; the viscosity number was determined in a phenol/o-dichlorobenzene solution having a weight ratio of 1:1 and a thermostatic water bath at $25\pm0.05$°C in accordance with the regulations of GB/T 17931-1999;

the esterified product Ba2 was transferred to a second pre-polycondensation reaction kettle, and meanwhile 0.174 kg/h titanium tetrabutoxide and 0.44 kg/h triphenyl phosphate were added; the reaction kettle had a temperature of 250°C, a pressure of 2 kPa and a retention time of 2-3 h; the excessive butanediol was moved out; at this time, the reaction product Pre-Ba2 had a viscosity number of 35 ml/g; the viscosity number was determined in a phenol/o-dichlorobenzene solution having a weight ratio of 1:1 and a thermostatic water bath at 25±0.05°C in accordance with the regulations of GB/T 17931-1999;

step S3, the prepolymer Pre-Ba1 was fed into a first final-polycondensation kettle by a melt pump; the first final-polycondensation kettle had a temperature of 220°C, a pressure of 120 Pa and a retention time of 2-4 h. At this time, the reaction product Poly-Bal had a viscosity number of 141 ml/g and the viscosity number was determined in a phenol/o-dichlorobenzene solution having a weight ratio of 1:1 and a thermostatic water bath at 25±0.05°C in accordance with the regulations of GB/T 17931-1999;

the prepolymer Pre-Ba2 was fed into a second final-polycondensation kettle by a melt pump; the second final-polycondensation kettle had a temperature of 250°C, a pressure of 20 Pa and a retention time of 2-4 h. At this time, the reaction product Poly-Ba2 had a viscosity number of 120 ml/g and the viscosity number was determined in a phenol/o-dichlorobenzene solution having a weight ratio of 1:1 and a thermostatic water bath at 25±0.05°C in accordance with the regulations of GB/T 17931-1999;

step S4, the two final-polycondensation products Poly-Bal and Poly-Ba2 were continuously fed into a mixer, and the mixer had a temperature of 250°C and a retention time of 1.5 h. Afterwards, the obtained polyester was brought into a twin-screw extruder, and meanwhile, 5.2 kg/h hexamethylene diisocyanate (HDI) was metered and added, and temperature was set as 240°C. 3 min later after the retention time, the polyester was granulated by an underwater granulator, and dried to obtain the final polyester product.

Example 5:

Step S1, 437 kg/h adipic acid and 404 kg/h 1,4-butanediol were continuously added to a slurry preparation kettle, and the prepared slurry was continuously fed into a first esterification reactor, and another pathway of 1,4-butanediol from the bottom of the process tower had a flow rate of 135 kg/h, meanwhile, 0.60 kg/h glycerin and 0.224 kg/h titanium tetrabutoxide were added to control a pressure of the reactor to be 40 kPa (absolute pressure) and a temperature to be 190°C, and the retention time was 2-4 h; water, tetrahydrofuran and butanediol generated by the reaction were removed to obtain an esterified product Ba1;

437 kg/h terephthalic acid and 356 kg/h 1,4-butanediol were continuously added to a slurry preparation kettle, and the prepared slurry was continuously fed into a second esterification reactor, and another pathway of 1,4-butanediol from the bottom of the process tower had a flow rate of 119 kg/h, meanwhile, 0.53 kg/h glycerin and 0.406 kg/h titanium tetrabutoxide were added to control a pressure of the reactor to be 40 kPa (absolute pressure) and a temperature to be 240°C, and the retention time was 2-4 h; water, tetrahydrofuran and butanediol generated by the reaction were removed to obtain an esterified product Ba2;

step S2, the esterified product Ba1 was transferred to a first pre-polycondensation reaction kettle, and meanwhile 0.096 kg/h titanium tetrabutoxide and 0.245 kg/h triphenyl phosphate were added; the reaction kettle had a temperature of 200°C, a pressure of 4 kPa and a retention time of 2-3 h; the excessive butanediol was moved out; at this time, the reaction product Pre-Ba1 had a viscosity number of 42 ml/g; the viscosity number was determined in a phenol/o-dichlorobenzene solution having a weight ratio of 1:1 and a thermostatic water bath at 25±0.05°C in accordance with the regulations of GB/T 17931-1999;

the esterified product Ba2 was transferred to a second pre-polycondensation reaction kettle, and meanwhile 0.174 kg/h titanium tetrabutoxide and 0.44 kg/h triphenyl phosphate were added; the reaction kettle had a temperature of 250°C, a pressure of 2 kPa and a retention time of 2-3 h; the excessive butanediol was moved out; at this time, the reaction product Pre-Ba2 had a viscosity number of 28 ml/g; the viscosity number was determined in a phenol/o-dichlorobenzene solution having a weight ratio of 1:1 and a thermostatic water bath at 25±0.05°C in accordance with the regulations of GB/T 17931-1999;

step S3, the prepolymer Pre-Ba1 was fed into a first final-polycondensation kettle by a melt pump; the first final-polycondensation kettle had a temperature of 220°C, a pressure of 120 Pa and a retention time of 2-4 h. At this time, the reaction product Poly-Bal had a viscosity number of 140 ml/g and the viscosity number was determined in a phenol/o-dichlorobenzene solution having a weight ratio of 1:1 and a thermostatic water bath at 25±0.05°C in accordance with the regulations of GB/T 17931-1999;

the prepolymer Pre-Ba2 was fed into a second final-polycondensation kettle by a melt pump; the second final-polycondensation kettle had a temperature of 250°C, a pressure of 20 Pa and a retention time of 2-4 h. At this time, the reaction product Poly-Ba2 had a viscosity number of 125 ml/g and the viscosity number was determined in a phenol/o-dichlorobenzene solution having a weight ratio of 1:1 and a thermostatic water bath at 25±0.05°C in accordance with the regulations of GB/T 17931-1999;

step S4, the two final-polycondensation products Poly-Bal and Poly-Ba2 were continuously fed into a mixer, and the mixer had a temperature of 250°C and a retention time of 1.5 h. Afterwards, the obtained polyester was brought into a twin-screw extruder, and meanwhile, 11.2 kg/h N,N'-di(2,6-diisopropylphenyl)carbodiimide (Stabaxol I) was metered and added, and temperature was set as 240°C. 3 min later after the retention time, the polyester was granulated by an underwater granulator, and dried to obtain the final polyester product.

Example 6:

Step S1, 437 kg/h adipic acid and 404 kg/h 1,4-butanediol were continuously added to a slurry preparation kettle, and the prepared slurry was continuously fed into a first esterification reactor, and another pathway of 1,4-butanediol from the bottom of the process tower had a flow rate of 135 kg/h, meanwhile, 0.60 kg/h glycerin and 0.224 kg/h titanium tetrabutoxide were added to control a pressure of the reactor to be 40 kPa (absolute pressure) and a temperature to be 190°C, and the retention time was 2-4 h; water, tetrahydrofuran and butanediol generated by the reaction were removed to obtain an esterified product Ba1;

600 kg/h terephthalic acid and 488 kg/h 1,4-butanediol were continuously added to a slurry preparation kettle, and the prepared slurry was continuously fed into a second esterification reactor, and another pathway of 1,4-butanediol from the bottom of the process tower had a flow rate of 163 kg/h, meanwhile, 0.73 kg/h glycerin and 0.56 kg/h titanium tetrabutoxide were added to control a pressure of the reactor to be 40 kPa (absolute pressure) and a temperature to be 240°C, and the retention time was 2-4 h; water, tetrahydrofuran and butanediol generated by the reaction were removed; the obtained esterified product A1 was continuously extracted from the reaction kettle to obtain an esterified product Ba2;

step S2, the esterified product Ba1 was transferred to a first pre-polycondensation reaction kettle, and meanwhile 0.096 kg/h titanium tetrabutoxide and 0.245 kg/h triphenyl phosphate were added; the reaction kettle had a temperature of 200°C, a pressure of 4 kPa and a retention time of 2-3 h; the excessive butanediol was moved out; at this time, the reaction product Pre-Ba1 had a viscosity number of 47 ml/g; the viscosity number was determined in a phenol/o-dichlorobenzene solution having a weight ratio of 1:1 and a thermostatic water bath at $25 \pm 0.05°C$ in accordance with the regulations of GB/T 17931-1999;

the esterified product Ba2 was transferred to a second pre-polycondensation reaction kettle, and meanwhile 0.24 kg/h titanium tetrabutoxide and 0.60 kg/h triphenyl phosphate were added; the reaction kettle had a temperature of 250°C, a pressure of 2 kPa and a retention time of 2-3 h; the excessive butanediol was moved out; at this time, the reaction product Pre-Ba2 had a viscosity number of 35 ml/g; the viscosity number was determined in a phenol/o-dichlorobenzene solution having a weight ratio of 1:1 and a thermostatic water bath at $25 \pm 0.05°C$ in accordance with the regulations of GB/T 17931-1999;

step S3, the prepolymer Pre-Ba1 was fed into a first final-polycondensation kettle by a melt pump; the first final-polycondensation kettle had a temperature of 220°C, a pressure of 120 Pa and a retention time of 2-4 h. At this time, the reaction product Poly-Bal had a viscosity number of 132 ml/g and the viscosity number was determined in a phenol/o-dichlorobenzene solution having a weight ratio of 1:1 and a thermostatic water bath at $25 \pm 0.05°C$ in accordance with the regulations of GB/T 17931-1999;

the prepolymer Pre-Ba2 was fed into a second final-polycondensation kettle by a melt pump; the second final-polycondensation kettle had a temperature of 250°C, a pressure of 20 Pa and a retention time of 2-4 h. At this time, the reaction product Poly-Ba2 had a viscosity number of 119 ml/g and the viscosity number was determined in a phenol/o-dichlorobenzene solution having a weight ratio of 1:1 and a thermostatic water bath at $25 \pm 0.05°C$ in accordance with the regulations of GB/T 17931-1999;

step S4, the two final-polycondensation products Poly-Bal and Poly-Ba2 were continuously fed into a mixer, and the mixer had a temperature of 250°C and a retention time of 1.5 h. Afterwards, the obtained polyester was brought into a twin-screw extruder, and meanwhile, 6.11 kg/h hexamethylene diisocyanate (HDI) was metered and added, and temperature was set as 240°C. 3 min later after the retention time, the polyester was granulated by an underwater granulator, and dried to obtain the final polyester product.

Example 7:

Step S1, 437 kg/h adipic acid and 404 kg/h 1,4-butanediol were continuously added to a slurry preparation kettle, and the prepared slurry was continuously fed into a first esterification reactor, and another pathway of 1,4-butanediol from the bottom of the process tower had a flow rate of 135 kg/h, meanwhile, 0.60 kg/h glycerin and 0.224 kg/h titanium tetrabutoxide were added to control a pressure of the reactor to be 40 kPa (absolute pressure) and a temperature to be 190°C, and the retention time was 2-4 h; water, tetrahydrofuran and butanediol generated by the reaction were removed to obtain an esterified product Ba1;

437 kg/h terephthalic acid and 356 kg/h 1,4-butanediol were continuously added to a slurry preparation kettle, and the prepared slurry was continuously fed into a second esterification reactor, and another pathway of 1,4-butanediol from the bottom of the process tower had a flow rate of 119 kg/h, meanwhile, 0.53 kg/h glycerin and 0.406 kg/h titanium tetrabutoxide were added to control a pressure of the reactor to be 40 kPa (absolute pressure) and a temperature to be 240°C, and the retention time was 2-4 h; water, tetrahydrofuran and butanediol generated by the reaction were removed; the obtained esterified product A1 was continuously extracted from the reaction kettle to obtain an esterified product Ba2;

step S2, the esterified product Ba1 was transferred to a first pre-polycondensation reaction kettle, and meanwhile 0.096 kg/h titanium tetrabutoxide and 0.245 kg/h triphenyl phosphate were added; the reaction kettle had a temperature of 200°C, a pressure of 4 kPa and a retention time of 2-3 h; the excessive butanediol was moved out; at this time, the reaction product Pre-Ba1 had a viscosity number of 40 ml/g; the viscosity number was determined in a phenol/o-dichlorobenzene solution having a weight ratio of 1:1 and a thermostatic water bath at 25±0.05°C in accordance with the regulations of GB/T 17931-1999;

the esterified product Ba2 was transferred to a second pre-polycondensation reaction kettle, and meanwhile 0.174 kg/h titanium tetrabutoxide and 0.44 kg/h triphenyl phosphate were added; the reaction kettle had a temperature of 250°C, a pressure of 2 kPa and a retention time of 2-3 h; the excessive butanediol was moved out; at this time, the reaction product Pre-Ba2 had a viscosity number of 29 ml/g; the viscosity number was determined in a phenol/o-dichlorobenzene solution having a weight ratio of 1:1 and a thermostatic water bath at 25±0.05°C in accordance with the regulations of GB/T 17931-1999;

step S3, the prepolymer Pre-Ba1 was fed into a first final-polycondensation kettle by a melt pump; the first final-polycondensation kettle had a temperature of 220°C, a pressure of 120 Pa and a retention time of 2-4 h. At this time, the reaction product Poly-Bal had a viscosity number of 130 ml/g and the viscosity number was determined in a phenol/o-dichlorobenzene solution having a weight ratio of 1:1 and a thermostatic water bath at 25±0.05°C in accordance with the regulations of GB/T 17931-1999;

the prepolymer Pre-Ba2 was fed into a second final-polycondensation kettle by a melt pump; the second final-polycondensation kettle had a temperature of 250°C, a pressure of 20 Pa and a retention time of 2-4 h. At this time, the reaction product Poly-Ba2 had a viscosity number of 114ml/g and the viscosity number was determined in a phenol/o-dichlorobenzene solution having a weight ratio of 1:1 and a thermostatic water bath at 25±0.05°C in accordance with the regulations of GB/T 17931-1999;

step S4, the two final-polycondensation products Poly-Bal and Poly-Ba2 were continuously fed into a mixer, and the mixer had a temperature of 250°C and a retention time of 1.5 h. Afterwards, the obtained polyester was brought into a twin-screw extruder, and meanwhile, 5.2 kg/h hexamethylene diisocyanate (HDI) was metered and added, and temperature was set as 240°C. 6 min later after the retention time, the polyester was granulated by an underwater granulator, and dried to obtain the final polyester product.

Example 8:

Step S1, 437 kg/h adipic acid and 404 kg/h 1,4-butanediol were continuously added to a slurry preparation kettle, and the prepared slurry was continuously fed into a first esterification reactor, and another pathway of 1,4-butanediol from the bottom of the process tower had a flow rate of 135 kg/h, meanwhile, 0.60 kg/h glycerin and 0.224 kg/h titanium tetrabutoxide were added to control a pressure of the reactor to be 40 kPa (absolute pressure) and a temperature to be 190°C, and the retention time was 2-4 h; water, tetrahydrofuran and butanediol generated by the reaction were removed to obtain an esterified product Ba1;

437 kg/h terephthalic acid and 356 kg/h 1,4-butanediol were continuously added to a slurry preparation kettle, and the prepared slurry was continuously fed into a second esterification reactor, and another pathway of 1,4-butanediol from the bottom of the process tower had a flow rate of 119 kg/h, meanwhile, 0.53 kg/h glycerin and 0.406 kg/h titanium tetrabutoxide were added to control a pressure of the reactor to be 40 kPa (absolute pressure) and a temperature to be 240°C, and the retention time was 2-4 h; water, tetrahydrofuran and butanediol generated by the reaction were removed; the obtained esterified product A1 was continuously extracted from the reaction kettle to obtain an esterified product Ba2;

step S2, the esterified product Ba1 was transferred to a first pre-polycondensation reaction kettle, and meanwhile 0.096 kg/h titanium tetrabutoxide and 0.245 kg/h triphenyl phosphate were added; the reaction kettle had a temperature of 200°C, a pressure of 4 kPa and a retention time of 2-3 h; the excessive butanediol was moved out; at this time, the reaction product Pre-Ba1 had a viscosity number of 43ml/g; the viscosity number was determined in a phenol/o-dichlorobenzene solution having a weight ratio of 1:1 and a thermostatic water bath at 25±0.05°C in accordance with the regulations of GB/T 17931-1999;

the esterified product Ba2 was transferred to a second pre-polycondensation reaction kettle, and meanwhile 0.174 kg/h titanium tetrabutoxide and 0.44 kg/h triphenyl phosphate were added; the reaction kettle had a temperature of 250°C, a pressure of 2 kPa and a retention time of 2-3 h; the excessive butanediol was moved out; at this time, the reaction product Pre-Ba2 had a viscosity number of 25ml/g; the viscosity number was determined in a phenol/o-dichlorobenzene solution having a weight ratio of 1:1 and a thermostatic water bath at 25±0.05°C in accordance with the regulations of GB/T 17931-1999;

step S3, the prepolymer Pre-Ba1 was fed into a first final-polycondensation kettle by a melt pump; the first final-polycondensation kettle had a temperature of 220°C, a pressure of 120 Pa and a retention time of 2-4 h. At this time, the reaction product Poly-Bal had a viscosity number of 133ml/g and the viscosity number was determined in a phenol/o-dichlorobenzene solution having a weight ratio of 1:1 and a thermostatic water bath at 25±0.05°C in accordance with the regulations of GB/T 17931-1999;

the prepolymer Pre-Ba2 was fed into a second final-polycondensation kettle by a melt pump; the second final-polycondensation kettle had a temperature of 250°C, a pressure of 20 Pa and a retention time of 2-4 h. At this time, the reaction product Poly-Ba2 had a viscosity number of 112 ml/g and the viscosity number was determined in a phenol/o-dichlorobenzene solution having a weight ratio of 1:1 and a thermostatic water bath at 25±0.05°C in accordance with the regulations of GB/T 17931-1999;

step S4, the two final-polycondensation products Poly-Bal and Poly-Ba2 were continuously fed into a mixer, and the mixer had a temperature of 250°C and a retention time of 1.5 h. Afterwards, the obtained polyester was brought into a twin-screw extruder, and meanwhile, 5.2 kg/h hexamethylene diisocyanate (HDI) was metered and added, and temperature was set as 240°C. 12 min later after the retention time, the polyester was granulated by an underwater granulator, and dried to obtain the final polyester product.

Example 9:

Step S1, 437 kg/h adipic acid and 404 kg/h 1,4-butanediol were continuously added to a slurry preparation kettle, and the prepared slurry was continuously fed into a first esterification reactor, and another pathway of 1,4-butanediol from the bottom of the process tower had a flow rate of 135 kg/h, meanwhile, 0.60 kg/h glycerin and 0.224 kg/h titanium tetrabutoxide were added to control a pressure of the reactor to be 40 kPa (absolute pressure) and a temperature to be 190°C, and the retention time was 2-4 h; water, tetrahydrofuran and butanediol generated by the reaction were removed to obtain an esterified product Ba1;

437 kg/h terephthalic acid and 356 kg/h 1,4-butanediol were continuously added to a slurry preparation kettle, and the prepared slurry was continuously fed into a second esterification reactor, and another pathway of 1,4-butanediol from the bottom of the process tower had a flow rate of 119 kg/h, meanwhile, 0.53 kg/h glycerin and 0.406 kg/h titanium tetrabutoxide were added to control a pressure of the reactor to be 40 kPa (absolute pressure) and a temperature to be 240°C, and the retention time was 2-4 h; water, tetrahydrofuran and butanediol generated by the reaction were removed; the obtained esterified product A1 was continuously extracted from the reaction kettle to obtain an esterified product Ba2;

step S2, the esterified product Ba1 was transferred to a first pre-polycondensation reaction kettle, and meanwhile 0.096 kg/h titanium tetrabutoxide and 0.245 kg/h triphenyl phosphate were added; the reaction kettle had a temperature of 200°C, a pressure of 4 kPa and a retention time of 2-3 h; the excessive butanediol was moved out; at this time, the reaction product Pre-Ba1 had a viscosity number of 47 ml/g; the viscosity number was determined in a phenol/o-dichlorobenzene solution having a weight ratio of 1:1 and a thermostatic water bath at 25±0.05°C in accordance with the regulations of GB/T 17931-1999;

the esterified product Ba2 was transferred to a second pre-polycondensation reaction kettle, and meanwhile 0.174 kg/h titanium tetrabutoxide and 0.44 kg/h triphenyl phosphate were added; the reaction kettle had a temperature of 250°C, a pressure of 2 kPa and a retention time of 2-3 h; the excessive butanediol was moved out; at this time, the reaction product Pre-Ba2 had a viscosity number of 29 ml/g; the viscosity number was determined in a phenol/o-dichlorobenzene solution having a weight ratio of 1:1 and a thermostatic water bath at 25±0.05°C in accordance with the regulations of GB/T 17931-1999;

step S3, the prepolymer Pre-Ba1 was fed into a first final-polycondensation kettle by a melt pump; the first final-polycondensation kettle had a temperature of 220°C, a pressure of 120 Pa and a retention time of 2-4 h. At this time, the reaction product Poly-Bal had a viscosity number of 136ml/g and the viscosity number was determined in a phenol/o-dichlorobenzene solution having a weight ratio of 1:1 and a thermostatic water bath at 25±0.05°C in accordance with the regulations of GB/T 17931-1999;

the prepolymer Pre-Ba2 was fed into a second final-polycondensation kettle by a melt pump; the second final-polycondensation kettle had a temperature of 250°C, a pressure of 20 Pa and a retention time of 2-4 h. At this time, the reaction product Poly-Ba2 had a viscosity number of 120 ml/g and the viscosity number was determined in a phenol/o-dichlorobenzene solution having a weight ratio of 1:1 and a thermostatic water bath at 25±0.05°C in accordance with the regulations of GB/T 17931-1999;

step S4, the two final-polycondensation products Poly-Bal and Poly-Ba2 were continuously fed into a mixer, and the mixer had a temperature of 250°C and a retention time of 2 h. Afterwards, the polyester was granulated by an underwater granulator, and dried to obtain the final polyester product.

Example 10:

1951 g paraphthaloyl chloride, 2000 g adipoyl chloride and 0.73 g undecylenoyl chloride (CAS: 38460-95-6) were dissolved into 2000 ml dichloromethane under the protection of high-purity nitrogen to obtain an acyl chloride solution, then the solution was kept in an ice bath and cooled to 0°C for further use. 1890 g 1,4-butanediol and 4240 g triethylamine were added to 3000 ml dichloromethane, and stirred evenly to obtain an alkanolamine solution. The above alkanolamine solution was dropwisely added to the acyl chloride solution slowly to control the dropping rate such that the solution temperature was controlled within 3°C, and the dropwise addition was completed for about 1 h. The ice bath was removed at the end of the dropwise addition, and the remaining solution was stirred for reaction for 24 h at room temperature. The product was dropwisely added to a mixed solution of triethylamine and ethanol (a volume ratio of 1:2) to generate white precipitate, standing was performed, after the precipitation was completed, suction filtration was performed. The solution was washed for several times by the mixed solution of triethylamine and ethanol and deionized water, respectively, and finally put to a vacuum oven at 70°C for drying for 10 h, thus obtaining a powdery polymer. The powdery polymer was extruded and granulated with a twin-screw extruder at an extruding temperature of 240°C, cooled with water and dried to obtain the final polyester product.

Comparative Example 1:

Step S1, 437 kg/h terephthalic acid, 437 kg/h adipic acid, 760 kg/h 1,4-butanediol, 1.13 kg/h glycerin and 0.63 kg/h tetrabutyl ortho-titanate were continuously added to a slurry preparation kettle, and the prepared slurry was continuously fed into an esterification reactor, and another pathway of 1,4-butanediol from the bottom of the process tower had a flow rate of 253 kg/h, meanwhile, a pressure of the reactor was controlled to be 40 kPa (absolute pressure) and a temperature was controlled to be 240°C, and the retention time was 2-4 h; water, tetrahydrofuran and butanediol generated by the reaction were removed to obtain an esterified product BA;

step S2, the esterified product BA was brought into to a pre-polycondensation reaction kettle by gravity, and meanwhile 0.27 kg/h titanium tetrabutoxide and 0.685 kg/h triphenyl phosphate were added; the reaction kettle had a temperature of 250°C, a pressure of 2 kPa and a retention time of 2-3 h; the excessive butanediol was moved out; at this time, the reaction product Pre-BA had a viscosity number of 39 ml/g; the viscosity number was determined in a phenol/o-dichlorobenzene solution having a weight ratio of 1:1 and a thermostatic water bath at 25±0.05°C in accordance with the regulations of GB/T 17931-1999;

step S3, the prepolymer Pre-BA was fed into a disc-type reactor (namely, a final-polycondensation kettle) by a melt pump; the final-polycondensation kettle had a temperature of 250°C, a pressure of 20 Pa and a retention time of 2-4 h. At this time, the reaction product Poly-BA had a viscosity number of 133 ml/g and the viscosity number was determined in a phenol/o-dichlorobenzene solution having a weight ratio of 1:1 and a thermostatic water bath at 25±0.05°C in accordance with the regulations of GB/T 17931-1999;

step S4, the obtained polyester was brought into a twin-screw extruder, and meanwhile, 5.2 kg/h hexamethylene diisocyanate (HDI) was metered and added, and temperature was set as 240°C. 3 min later after the retention time, the polyester was granulated by an underwater granulator, and dried to obtain the final polyester product.

Comparative Example 2:

Step S1, 437 kg/h adipic acid and 404 kg/h 1,4-butanediol were continuously added to a slurry preparation kettle, and the prepared slurry was continuously fed into a first esterification reactor, and another pathway of 1,4-butanediol from the bottom of the process tower had a flow rate of 135 kg/h, meanwhile, 0.60 kg/h glycerin and 0.224 kg/h titanium tetrabutoxide were added to control a pressure of the reactor to be 40 kPa (absolute pressure) and a temperature to be 190°C, and the retention time was 2-4 h; water, tetrahydrofuran and butanediol generated by the reaction were removed to obtain an esterified product Ba1;

437 kg/h terephthalic acid and 356 kg/h 1,4-butanediol were continuously added to a slurry preparation kettle, and the prepared slurry was continuously fed into a second esterification reactor, and another pathway of 1,4-butanediol from the bottom of the process tower had a flow rate of 119 kg/h, meanwhile, 0.53 kg/h glycerin and 0.406 kg/h titanium tetrabutoxide were added to control a pressure of the reactor to be 40 kPa (absolute pressure) and a temperature to be 240°C, and the retention time was 2-4 h; water, tetrahydrofuran and butanediol generated by the reaction were removed; the obtained esterified product A1 was continuously extracted from the reaction kettle to obtain an esterified product Ba2;

step S2, the two esterified products Ba1 and Ba2 were continuously fed into a mixer, and the mixer had a temperature of 230°C and a retention time of 30 min. The mixture flowing out of the mixer was brought into to a pre-polycondensation reaction kettle by gravity, and meanwhile 0.27 kg/h titanium tetrabutoxide and 0.685 kg/h triphenyl phosphate were added; the reaction kettle had a temperature of 250°C, a pressure of 2 kPa and a retention time of 2-3 h; the excessive butanediol was moved out; at this time, the reaction product Pre-BA had a viscosity number of 37 ml/g; the viscosity number was determined in a phenol/o-dichlorobenzene solution having a weight ratio of 1:1 and a thermostatic water bath at $25 \pm 0.05$°C in accordance with the regulations of GB/T 17931-1999;

step S3, the prepolymer Pre-BA was fed into a disc-type reactor (namely, a final-polycondensation kettle) by a melt pump; the final-polycondensation kettle had a temperature of 250°C, a pressure of 20 Pa and a retention time of 2-4 h. At this time, the reaction product Poly-BA had a viscosity number of 128 ml/g and the viscosity number was determined in a phenol/o-dichlorobenzene solution having a weight ratio of 1:1 and a thermostatic water bath at $25 \pm 0.05$°C in accordance with the regulations of GB/T 17931-1999;

step S4, the obtained polyester was brought into a twin-screw extruder, and meanwhile, 5.2 kg/h hexamethylene diisocyanate (HDI) was metered and added, and temperature was set as 240°C. 3 min later after the retention time, the polyester was granulated by an underwater granulator, and dried to obtain the final polyester product.

Comparative Example 3:

2.36 kg terephthalic acid, 2.36 kg adipic acid, 4.38 kg 1,4-butanediol, 6.1 g glycerin and 4.9 g titanium tetrabutoxide were fed into a reaction kettle under the protection of high-purity nitrogen, and heated up to 240°C, and kept at the constant temperature for 120 min. 3.7 g triphenyl phosphate was then added. The pressure in the reaction kettle was reduced to 50 Pa below within 60 min, and reaction was performed for 60-120 min at 260°C. Afterwards, high-purity nitrogen was pumped into the reaction kettle, and 28.1 g hexamethylene diisocyanate (HDI) was added and stirred for 5 min at a constant temperature of 260°C, and then discharged.

Table 1 Performance test results of Examples 1-10 and Comparative Examples 1-3

| | Example 1 | Example 2 | Example 3 | Example 4 | Example 5 | Example 6 | Example 7 |
|---|---|---|---|---|---|---|---|
| Branching agent | Glycerin | Glycerin | TMP | 0 | Glycerin | Glycerin | Glycerin |
| Chain extender | HDI | HDI | HDI | HDI | Stabaxol | HDI | HDI |
| Retention time of the chain extension/min | 3 | 3 | 3 | 3 | 3 | 3 | 6 |
| Terephthalic acid/mol% | 46.7 | 46.9 | 46.6 | 46.5 | 46.8 | 54.8 | 46.9 |
| Adipic acid/mol% | 53.3 | | 53.4 | 53.5 | 53.2 | 46.2 | 53.1 |
| Decanedioic acid/mol% | | 53.1 | | | | | |
| Double bond content C/mmol/kg | 0.79 | 0.85 | 0.81 | 0.82 | 0.81 | 0.82 | 2.2 |
| Carboxyl group/mmol/kg | 22 | 26 | 23 | 24 | 12 | 23 | 35 |
| Viscosity number/ml/g | 205 | 207 | 209 | 192 | 210 | 207 | 220 |
| Retention rate R of heat retention melt index/% | 89 | 82 | 87 | 85 | 85 | 88 | 73 |
| Hunter whiteness | 82.3 | 80.2 | 81.9 | 81.6 | 80.6 | 81.1 | 76.3 |

Continued table 1:

| | Example 8 | Example 9 | Example 10 | Comparative Example 1 | Comparative Example 2 | Comparative Example 3 |
|---|---|---|---|---|---|---|
| Branching agent | Glycerin | Glycerin | - | Glycerin | Glycerin | Glycerin |
| Chain extender | HDI | HDI | - | HDI | HDI | HDI |
| Retention time of the chain extension/min | 12 | 0 | - | 3 | 3 | 5 |
| Terephthalic acid/mol% | 46.6 | 46.7 | 46.7 | 46.5 | 46.8 | 46.4 |
| Adipic acid/mol% | 53.4 | 53.3 | 53.3 | 53.5 | 53.2 | 53.6 |

(continued)

EP 4 174 105 B1

| Continued table 1: | Exa mpl e8 | Exa mpl e 9 | Exa mpl e 10 | Comparativ e Example 1 | Comparativ e Example 2 | Comparativ e Example 3 |
|---|---|---|---|---|---|---|
| Double bond content C/mmol/kg | 4.1 | 1.24 | 0.84 | 10.6 | 8.3 | 11.1 |
| Carboxyl group/mmol/kg | 41 | 29 | 29 | 33 | 30 | 34 |
| Viscosity number/ml/g | 201 | 179 | 180 | 210 | 208 | 203 |
| Retention rate R of heat retention melt index/% | 71 | 77 | 83 | 56 | 62 | 54 |
| | | | | | | |
| Hunter whiteness | 75.6 | 78.8 | 80.1 | 66.8 | 70.9 | 65.4 |

It can be seen from the above results that in this present invention, the double bond content of the semi-aromatic polyester is controlled within a scope of 0.55-4.5 mmol/kg; the retention rate of heat retention melt index is high, the Hunter whiteness is high and color is fine.

Mixed esterification step is used in the whole process of Comparative Example 1; the higher polymerization temperature enables the portion derived from aliphatic polyester in the semi-aromatic polyester to be thermally degraded easily; the obtained double bond content is high, the retention rate of heat retention melt index is low, and color is poor.

In Comparative Example 2, the aliphatic polyester and the aromatic polyester are esterfied independently, but still mixed after the esterification, which has certain effects on reducing the double bond content and improving the retention rate of heat retention melt index and color. However, the reaction time of the esterification stage accounts for a low proportion in the whole polymerization reaction; therefore, the improvement effect is limited.

Intermittent process is used in Comparative Example 3 for production; the obtained double bond content is high, and the retention rate of heat retention melt index is low and color is poor.

**Claims**

1. A semi-aromatic polyester, derived from a repeating unit consisting of the following components:
   a first component A, based on a total molar weight of the first component A, comprising:

   a1) 40-60 mol% of at least one aliphatic dicarboxylic acid or a derivative thereof;
   a2) 40-60 mol% of at least one aromatic dicarboxylic acid or a derivative thereof;
   a second component B: comprising a diol having 2-12 carbon atoms;
   **characterized in that**, double bonds in the semi-aromatic polyester have a content of 0.55-4.5 mmol/kg determined as indicated in the specification.

2. The semi-aromatic polyester according to claim 1, **characterized in that**, the component a1) is selected from one or a mixture of several of oxalic acid, propandioic acid, succinic acid, glutaric acid, adipic acid, heptanedioic acid, octanedioic acid, azelaic acid, decanedioic acid, 1,11-undecanedicarboxylic acid, 1,10-decanedicarboxylic acid, undecandioic acid, 1,12-dodecanedicarboxylic acid, hexadecane diacid, eicosandioic acid, tetracosandioic acid or an ester derivative thereof or an anhydride derivative thereof.

3. The semi-aromatic polyester according to claim 1, **characterized in that**, the component a2) is selected from one or a mixture of several of terephthalic acid, iso-phthalic acid, naphthalenedicarboxylic acid, or an ester derivative thereof or an anhydride derivative thereof.

4. The semi-aromatic polyester according to claim 1, **characterized in that**, the second component B is selected from one or more of ethanediol, 1,3-propanediol, 1,4-butanediol, 1,5-pentanediol, 1,6-hexanediol, 1,9-nonanediol, 1,10-decanediol, 1,11-undecanediol, 1,12-dodecanediol, 1,4-cyclohexanediol, and 1,4-cyclohexanedimethanol.

5. The semi-aromatic polyester according to claim 1, **characterized in that**, the component a1) is selected from adipic acid or the ester derivative thereof or the anhydride derivative thereof; the component 2) is terephthalic acid or the ester derivative thereof or the anhydride derivative thereof; and the second component B is 1,4-butanediol.

6. The semi-aromatic polyester according to claim 1, **characterized in that**, based on the total molar weight of the first component A, the semi-aromatic polyester further comprises a third component C of 0.01-5.0 mol%, and a fourth component D of 0.01-5.0 mol%.

7. The semi-aromatic polyester according to claim 6, **characterized in that**, the third component C is selected from one or more of tartaric acid, citric acid, malic acid, trimethylolpropane, trimethylolethane, pentaerythritol, polyether triol, glycerol, 1,3,5-trimesic acid, 1,2,4-trimesic acid, 1,2,4-trimellitic anhydride, 1,2,4,5-prenitic acid or pyromelltic acid dianhydride.

8. The semi-aromatic polyester according to claim 6, **characterized in that**, the fourth component D is selected from one or more of isocyanate, isocyanurate, peroxide, epoxide, oxazoline, oxazine, lactam, carbodiimide or polycarbodiimide which contains two or more functional groups.

9. The semi-aromatic polyester according to any one of claims 1-8, **characterized in that**, the semi-aromatic polyester has a viscosity number of 150-350 ml/g, and the viscosity number is determined in a phenol/o-dichlorobenzene solution having a weight ratio of 1:1 and a thermostatic water bath at 25±0.05°C in accordance with the regulations of GB/T 17931-1999.

10. The semi-aromatic polyester according to any one of claims 1-8, **characterized in that**, the semi-aromatic polyester has a carboxyl group content of 5-60 mmol/kg.

11. A preparation method of the semi-aromatic polyester according to any one of claims 1-10, comprising the following steps:

step S1, adding the a1 in the first component A and the second component B to a slurry preparation kettle by a proportion, and transporting the prepared slurry to a first esterification reactor, then adding the second component B returned and a catalyst to the first esterification reactor from another pathway, and performing esterification reaction for 2-4 h at 150-200°C and 30-110 kPa to obtain an esterified product Ba1; adding the a2 in the first component A and the second component B to a slurry preparation kettle, and transporting the prepared slurry to a second esterification reactor, then adding the second component B returned and a catalyst to the second esterification reactor from another pathway, and performing esterification reaction for 2-4 h at 200-250°C and 30-110 kPa to obtain an esterified product Ba2;
step S2, performing primary polycondensation on the esterified product Ba1 in the step S1 at a reaction temperature of 170-220°C and a pressure of 1-10 kPa; performing primary polycondensation on the esterified product Ba2 in the step S1 at a reaction temperature of 230-270°C and a pressure of 1-10 kPa; performing the primary polycondensation on the esterified products Ba1 and Ba2 independently and respectively until each reaction product has a viscosity number of 15-60 ml/g, wherein the viscosity number is determined in a phenol/o-dichlorobenzene solution having a weight ratio of 1:1 and a thermostatic water bath at 25±0.05°C in accordance with the regulations of GB/T 17931-1999, thus respectively obtaining products Pre-Ba1 and Pre-Ba2 of the primary polycondensation;
step S3, transferring the product Pre-Ba1 of the primary polycondensation obtained in the step S2 to a first final-polycondensation kettle at a reaction temperature of 180-230°C and a pressure of 10-500 Pa; transferring the product Pre-Ba2 of the primary polycondensation obtained in the step S2 to a second final-polycondensation kettle at a reaction temperature of 220-270°C and a pressure of 10-500 Pa; performing polycondensation on the products Pre-Ba1 and Pre-Ba2 independently and respectively until each reaction product has a viscosity number of 50-180 ml/g, wherein the viscosity number is determined in a phenol/o-dichlorobenzene solution having a weight ratio of 1:1 and a thermostatic water bath at 25±0.05°C in accordance with the regulations of GB/T 17931-1999, thus respectively obtaining the final-polycondensation products Poly-Bal and Poly-Ba2;
step S4, performing mixed reaction on the final-polycondensation products Poly-Bal and Poly-Ba2 obtained in the step S3 in a mixer to obtain the semi-aromatic polyester such that the semi-aromatic polyester has a viscosity number of 150-300 ml/g, wherein the viscosity number is determined in a phenol/o-dichlorobenzene solution having a weight ratio of 1:1 and a thermostatic water bath at 25±0.05°C in accordance with the regulations of GB/T 17931-1999.

12. The preparation method of the semi-aromatic polyester according to claim 11, further comprising a step 5: adding the semi-aromatic polyester obtained in the step S4 to the fourth component D for chain propagation reaction at a reaction temperature of 200-270°C until a reaction product has a viscosity number of 150-350 ml/g, wherein the viscosity number is determined in a phenol/o-dichlorobenzene solution having a weight ratio of 1:1 and a thermostatic water bath at 25±0.05°C in accordance with the regulations of GB/T 17931-1999, and wherein the reaction retention time is 0.5-15 min.

13. A semi-aromatic polyester molding composition, comprising the following components by weight percentage:

5-95 wt% of the semi-aromatic polyester of any one of claims 1-10;
5-95 wt% of an additive and/or other polymers;
0-70 wt% of a reinforcing material and/or a filler.

14. An application of the semi-aromatic polyester of any one of claims 1-10 in preparing a compostable degradation product, **characterized in that**, the compostable degradation product is a fiber, a film or a container.

**EP 4 174 105 B1**

**Patentansprüche**

1. Semi-aromatischer Polyester, der aus einer sich wiederholenden Einheit abgeleitet ist, die aus den folgenden Komponenten besteht:
   einer ersten Komponente A, bezogen auf eine Gesamtstoffmenge der ersten Komponente A, umfassend:

   a1) 40-60 Mol-% wenigstens einer aliphatischen Dicarbonsäure oder eines Derivats davon;
   a2) 40-60 Mol-% wenigstens einer aromatischen Dicarbonsäure oder eines Derivats davon;
   einer zweiten Komponente B: umfassend ein Diol mit 2-12 Kohlenstoffatomen;
   **dadurch gekennzeichnet, dass** Doppelbindungen in dem semi-aromatischen Polyester einen Gehalt von 0,55-4,5 mmol/kg aufweisen, der so bestimmt wird, wie es in der Beschreibung angegeben ist.

2. Semi-aromatischer Polyester gemäß Anspruch 1, **dadurch gekennzeichnet, dass** die Komponente a1) aus einem oder einem Gemisch von mehreren aus Oxalsäure, Propandisäure, Bernsteinsäure, Glutarsäure, Adipinsäure, Heptandisäure, Octandisäure, Azelainsäure, Decandisäure, 1,11-Undecandicarbonsäure, 1,10-Decandicarbonsäure, Undecandisäure, 1,12-Dodecandicarbonsäure, Hexadecandisäure, Eicosandisäure, Tetracosandisäure oder einem Esterderivat davon oder einem Anhydridderivat davon ausgewählt ist.

3. Semi-aromatischer Polyester gemäß Anspruch 1, **dadurch gekennzeichnet, dass** die Komponente a2) aus einem oder einem Gemisch von mehreren aus Terephthalsäure, Isophthalsäure, Naphthalindicarbonsäure oder einem Esterderivat davon oder einem Anhydridderivat davon ausgewählt ist.

4. Semi-aromatischer Polyester gemäß Anspruch 1, **dadurch gekennzeichnet, dass** die zweite Komponente B aus einem oder mehreren aus Ethandiol, 1,3-Propandiol, 1,4-Butandiol, 1,5-Pentandiol, 1,6-Hexandiol, 1,9-Nonandiol, 1,10-Decandiol, 1,11-Undecandiol, 1,12-Dodecandiol, 1,4-Cyclohexandiol und 1,4-Cyclohexandimethanol ausgewählt ist.

5. Semi-aromatischer Polyester gemäß Anspruch 1, **dadurch gekennzeichnet, dass** die Komponente a1) aus Adipinsäure oder dem Esterderivat davon oder dem Anhydridderivat davon ausgewählt ist; es sich bei der Komponente 2) um Terephthalsäure oder das Esterderivat davon oder das Anhydridderivat davon handelt; und es sich bei der zweiten Komponente B um 1,4-Butandiol handelt.

6. Semi-aromatischer Polyester gemäß Anspruch 1, **dadurch gekennzeichnet, dass** bezogen auf die Gesamtstoffmenge der ersten Komponente A, der semi-aromatische Polyester weiterhin 0,01-5,0 Mol-% einer dritten Komponente C und 0,01-5,0 Mol-% einer vierten Komponente D umfasst.

7. Semi-aromatischer Polyester gemäß Anspruch 6, **dadurch gekennzeichnet, dass** die dritte Komponente C aus einem oder mehreren aus Weinsäure, Zitronensäure, Äpfelsäure, Trimethylolpropan, Trimethylolethan, Pentaerythrit, Polyethertriol, Glycerin, 1,3,5-Trimesinsäure, 1,2,4-Trimesinsäure, 1,2,4-Trimellithsäureanhydrid, 1,2,4,5-Prenitinsäure oder Pyromellithsäuredianhydrid ausgewählt ist.

8. Semi-aromatischer Polyester gemäß Anspruch 6, **dadurch gekennzeichnet, dass** die vierte Komponente D aus einem oder mehreren aus Isocyanat, Isocyanurat, Peroxid, Epoxid, Oxazolin, Oxazin, Lactam, Carbodiimid oder Polycarbodiimid, welche zwei oder mehr funktionelle Gruppen enthält, ausgewählt ist.

9. Semiaromatischer Polyester gemäß einem der Ansprüche 1-8, **dadurch gekennzeichnet, dass** der semi-aromatische Polyester eine Viskositätszahl von 150-350 ml/g aufweist und die Viskositätszahl in einer Phenol/o-Dichlorbenzol-Lösung mit einem Gewichtsverhältnis von 1:1 und einem thermostatisierten Wasserbad bei 25 $\pm$ 0,05 °C gemäß den Bestimmungen von GB/T 17931-1999 bestimmt wird.

10. Semi-aromatischer Polyester gemäß einem der Ansprüche 1-8, **dadurch gekennzeichnet, dass** der semi-aromatische Polyester einen Carboxygruppengehalt von 5-60 mmol/kg aufweist.

11. Herstellungsverfahren für den semi-aromatischen Polyester gemäß einem der Ansprüche 1-10, umfassend die folgenden Schritte:

    Schritt S1, Hinzufügen des a1 in der ersten Komponente A und die zweite Komponente B zu einem Suspensionskessel gemäß einem Anteil und Transportieren der hergestellten Suspension zu einem ersten Veresterungsreaktor, dann Hinzufügen der zurückgeführten zweiten Komponente B und eines Katalysators zu dem ersten Veresterungsreaktor auf einem anderen Weg und Durchführen einer Veresterungsreaktion für 2-4 h bei 150-200 °C und 30-110 kPa, wobei man ein verestertes Produkt Ba1 erhält; Hinzufügen des a2 in der ersten Komponente A und der zweiten Komponente B zu einem Suspensionskessel und Transportieren der hergestellten Suspension zu einem zweiten Veresterungsreaktor, dann Hinzufügen der zurückgeführten zweiten Komponente B und eines Katalysators zu dem zweiten Veresterungsreaktor auf einem anderen Weg und Durchführen einer Veresterungsreaktion während 2-4 h bei 200-250 °C und 30-110 kPa, wobei man ein verestertes Produkt Ba2 erhält;

Schritt S2, Durchführen einer primären Polykondensation mit dem in dem Schritt S1 veresterten Produkt Ba1 bei einer Reaktionstemperatur von 170-220 °C und einem Druck von 1-10 kPa; Durchführen einer primären Polykondensation mit dem in dem Schritt S1 veresterten Produkt Ba2 bei einer Reaktionstemperatur von 230-270 °C und einem Druck von 1-10 kPa; jeweils unabhängiges Durchführen der primären Polykondensation mit den veresterten Produkten Ba1 und Ba2, bis jedes Reaktionsprodukt eine Viskositätszahl von 15-60 ml/g aufweist, wobei die Viskositätszahl in einer Phenol/o-Dichlorbenzol-Lösung mit einem Gewichtsverhältnis von 1:1 und einem thermostatisierten Wasserbad bei 25 ± 0,05 °C gemäß den Bestimmungen von GB/T 17931-1999 bestimmt wird, wodurch man jeweils die Produkte Pre-Ba1 und Pre-Ba2 der primären Polykondensation erhält;

Schritt S3, Überführen des Produkts Pre-Ba1 der in dem Schritt S2 erhaltenen primären Polykondensation in einen ersten finalen Polykondensationskessel bei einer Reaktionstemperatur von 180-230 °C und einem Druck von 10-500 Pa; Überführen des Produkts Pre-Ba2 der in dem Schritt S2 erhaltenen primären Polykondensation in einen zweiten finalen Polykondensationskessel bei einer Reaktionstemperatur von 220-270 °C und einem Druck von 10-500 Pa; jeweils unabhängiges Durchführen einer Polykondensation mit den Produkten Pre-Ba1 und Pre-Ba2, bis jedes Reaktionsprodukt eine Viskositätszahl von 50-180 ml/g aufweist, wobei die Viskositätszahl in einer Phenol/o-Dichlorbenzol-Lösung mit einem Gewichtsverhältnis von 1:1 und einem thermostatisierten Wasserbad bei 25 ± 0,05 °C gemäß den Bestimmungen von GB/T 17931-1999 bestimmt wird, wodurch man jeweils die finalen Polykondensationsprodukte Poly-Ba1 und Poly-Ba2 erhält;

Schritt S4, Durchführen einer gemischten Reaktion mit den finalen Polykondensationsprodukten Poly-Ba1 und Poly-Ba2, die in Schritt S3 erhalten wurden, in einem Mischer, wobei man den semi-aromatischen Polyester erhält, so dass der semi-aromatische Polyester eine Viskositätszahl von 150-300 ml/g aufweist, wobei die Viskositätszahl in einer Phenol/o-Dichlorbenzol-Lösung mit einem Gewichtsverhältnis von 1:1 und einem thermostatisierten Wasserbad bei 25 ± 0,05 °C gemäß den Bestimmungen von GB/T 17931-1999 bestimmt wird.

12. Herstellungsverfahren für den semi-aromatischen Polyester gemäß Anspruch 11, weiterhin umfassend einen Schritt 5: Hinzufügen des in Schritt S4 erhaltenen semi-aromatischen Polyesters zu der vierten Komponente D für eine Kettenverlängerungsreaktion bei einer Reaktionstemperatur von 200-270 °C, bis ein Reaktionsprodukt eine Viskositätszahl von 150-350 ml/g aufweist, wobei die Viskositätszahl in einer Phenol/o-Dichlorbenzol-Lösung mit einem Gewichtsverhältnis von 1:1 und einem thermostatisierten Wasserbad bei 25 ± 0,05 °C gemäß den Bestimmungen von GB/T 17931-1999 bestimmt wird und wobei die Reaktionsretentionszeit 0,5-15 min beträgt.

13. Aus einem semi-aromatischen Polyester bestehende Formmasse, die die folgenden Komponenten in Gewichtsprozent umfasst:

5-95 Gew.-% des semi-aromatischen Polyesters gemäß einem der Ansprüche 1-10;
5-95 Gew.-% eines Additivs und/oder anderer Polymere;
0-70 Gew.-% eines Verstärkungsmaterials und/oder eines Füllstoffs.

14. Anwendung des semi-aromatischen Polyesters gemäß einem der Ansprüche 1-10 bei der Herstellung eines kompostierbaren abbaubaren Produkts, **dadurch gekennzeichnet, dass** das kompostierbare abbaubare Produkt eine Faser, eine Folie oder ein Behälter ist.

**Revendications**

1. Polyester semi-aromatique, dérivé d'un motif répété consistant en les composants suivants :
un premier composant A, par rapport à un poids molaire total dudit premier composant A, comprenant :

a1) 40-60 % molaire d'au moins un acide dicarboxylique aliphatique ou d'un dérivé de celui-ci,
a2) 40-60 % molaire d'au moins un acide dicarboxylique aromatique ou d'un dérivé de celui-ci,
un deuxième composant B: comprenant un diol ayant 2-12 atomes de carbone,

**caractérisé en ce que** les doubles liaisons dans le polyester semi-aromatique ont une teneur de 0,55-4,5 mmol/kg, déterminée comme indiquée dans la spécification.

2. Polyester semi-aromatique selon la revendication 1, **caractérisé en ce que** le composant a1) est choisi parmi un ou dans un mélange de plusieurs parmi l'acide oxalique, l'acide propanedioïque, l'acide succinique, l'acide glutarique, l'acide adipique, l'acide heptanedioïque, l'acide octanedioïque, l'acide azélaïque, l'acide décanedioïque, l'acide 1,11-undécanedicarboxylique, l'acide 1,10-décanedicarboxylique, l'acide undécanedioïque, l'acide 1,12-dodécanedicarboxylique, l'acide hexadécanedioïque, l'acide eicosanedioïque, l'acide tétracosanedioïque, ou un dérivé ester de celui-ci, ou un dérivé anhydride de celui-ci.

3. Polyester semi-aromatique selon la revendication 1, **caractérisé en ce que** le composant a2) est choisi parmi un ou dans un mélange de plusieurs parmi l'acide téréphtalique, l'acide isophtalique, l'acide naphtalinedicarboxylique, ou un dérivé ester de celui-ci, ou un dérivé anhydride de celui-ci.

4. Polyester semi-aromatique selon la revendication 1, **caractérisé en ce que** le deuxième composant B est choisi parmi un ou plusieurs parmi éthanediol, 1,3-propanediol, 1,4-butanediol, 1,5-pentanediol, 1,6-hexanediol, 1,9-nonanediol, 1,10-décanediol, 1,11-undécanediol, 1,12-dodécanediol, 1,4-cyclohexanediol, et 1,4-cyclohexanediméthanol.

5. Polyester semi-aromatique selon la revendication 1, **caractérisé en ce que** le composant a1) est choisi parmi l'acide adipique, ou ledit dérivé ester de celui-ci, ou ledit dérivé anhydride de celui-ci, le composant 2) est l'acide téréphtalique, ou ledit dérivé ester de celui-ci, ou ledit dérivé anhydride de celui-ci, et le deuxième composant B est le 1,4-butanediol.

6. Polyester semi-aromatique selon la revendication 1, **caractérisé en ce que** par rapport au poids molaire total dudit premier composant A, le polyester semi-aromatique comprend en outre un troisième composant C à 0,01-5,0 % molaire, et un quatrième composant D à 0,01-5,0 % molaire.

7. Polyester semi-aromatique selon la revendication 6, **caractérisé en ce que** le troisième composant C est choisi parmi un ou plusieurs de l'acide tartarique, l'acide citrique, l'acide malique, le triméthylolpropane, le triméthyloléthane, le pentaérythritol, le polyéther triol, le glycérol, l'acide 1,3,5-trimésique, l'acide 1,2,4-trimésique, l'anhydride 1,2,4-trimellitique, l'acide 1,2,4,5-prénitique, ou le dianhydride pyromellitique.

8. Polyester semi-aromatique selon la revendication 6, **caractérisé en ce que** le quatrième composant D est choisi parmi un ou plusieurs parmi isocyanate, isocyanurate, peroxyde, époxyde, oxazoline, oxazine, lactame, carbodiimide ou polycarbodiimide qui contient deux ou plusieurs groupes fonctionnels.

9. Polyester semi-aromatique selon l'une quelconque des revendications 1-8, **caractérisé en ce que** ledit polyester semi-aromatique présente un indice de viscosité de 150-350 ml/g, et ledit indice de viscosité est déterminé dans une solution de phénol/o-dichlorobenzène ayant un rapport pondéral de 1:1 et un bain marie thermostatique à 25 $\pm$ 0,05 °C selon les régulations de GB/T 17931-1999.

10. Polyester semi-aromatique selon l'une quelconque des revendications 1-8, **caractérisé en ce que** ledit polyester semi-aromatique présente une teneur en groupes carboxy de 5-60 mmol/kg.

11. Procédé de fabrication du polyester semi-aromatique selon l'une quelconque des revendications 1-10, comprenant les étapes suivantes :

l'étape 51, consistant à ajouter ledit a1 dans le premier composant A et le deuxième composant B dans une chaudière de préparation de suspensions selon une proportion, et transporter la suspension préparée à un premier réacteur d'estérification, ensuite ajouter le deuxième composant B retourné et un catalyseur dans le premier réacteur d'estérification à partir d'un chemin différent, et effectuer une réaction d'estérification pendant 2-4 h à 150-200 °C et 30-110 kPa pour obtenir un produit estérifié Ba1, ajouter ledit a2 dans le premier composant A et le deuxième composant B dans une chaudière de préparation de suspensions, et transporter la suspension préparée à un deuxième réacteur d'estérification, ensuite ajouter le deuxième composant B retourné et un catalyseur dans le deuxième réacteur d'estérification à partir d'un chemin différent, et effectuer une réaction d'estérification pendant 2-4 h à 200-250 °C et 30-110 kPa pour obtenir un produit estérifié Ba2,
l'étape S2, consistant à effectuer une polycondensation primaire avec le produit Ba1 estérifié dans l'étape S1 à une température de réaction de 170-220 °C et sous une pression de 1-10 kPa, effectuer une polycondensation primaire avec le produit Ba2 estérifié dans l'étape S1 à une température de réaction de 230-270 °C et sous une pression de 1-10 kPa, effectuer la polycondensation primaire avec les produits estérifiés Ba1 et Ba2 indépendamment et respectivement, jusqu'à ce que chaque produit de la réaction présente un indice de viscosité de 15-60 ml/g, dans lequel ledit indice de viscosité est déterminé dans une solution de phénol/o-dichlorobenzène ayant un rapport pondéral de 1:1 et un bain marie thermostatique à 25 ± 0,05 °C selon les régulations de GB/T 17931-1999, ainsi obtenant respectivement des produits Pre-Ba1 et Pre-Ba2 de la polycondensation primaire, l'étape S3, consistant à transférer le produit Pre-Ba1 de la polycondensation primaire obtenu dans l'étape S2 à une première chaudière de polycondensation finale à une température de réaction de 180-230 °C et sous une pression de 10-500 Pa, transférer le produit Pre-Ba2 de la polycondensation primaire obtenu dans l'étape S2 à une deuxième chaudière de polycondensation finale à une température de réaction de 220-270 °C et sous une pression de 10-500 Pa, effectuer une polycondensation avec les produits Pre-Ba1 et Pre-Ba2 indépendamment et respectivement, jusqu'à ce que chaque produit présente un indice de viscosité de 50-180 ml/g, dans lequel ledit indice de viscosité est déterminé dans une solution de phénol/o-dichlorobenzène ayant un rapport pondéral de 1:1 et un bain marie thermostatique à 25 ± 0,05 °C selon les régulations de GB/T 17931-1999, ainsi obtenant respectivement les produits de polycondensation finaux Poly-Ba1 et Poly-Ba2, l'étape S4, consistant à effectuer une réaction mixte avec les produits de polycondensation finaux Poly-Ba1 et Poly-Ba2 obtenus dans l'étape S3 dans un mélangeur, pour obtenir ledit polyester semi-aromatique, dans une telle manière que ledit polyester semi-aromatique présente un indice de viscosité de 150-300 ml/g, dans lequel ledit indice de viscosité est déterminé dans une solution de phénol/o-dichlorobenzène ayant un rapport pondéral de 1:1 et un bain marie thermostatique à 25 ± 0,05 °C selon les régulations de GB/T 17931-1999.

12. Procédé de préparation du polyester semi-aromatique selon la revendication 11, comprenant en outre une étape 5 consistant à : ajouter le polyester semi-aromatique obtenu dans l'étape S4 au quatrième composant D pour une réaction de croissance de chaîne à une température de réaction de 200-270 °C, jusqu'à ce qu'un produit de réaction présente un indice de viscosité de 150-350 ml/g, dans lequel ledit indice de viscosité est déterminé dans une solution de phénol/o-dichlorobenzène ayant un rapport pondéral de 1:1 et un bain marie thermostatique à 25 ± 0,05 °C selon les régulations de GB/T 17931-1999, et dans lequel le temps de rétention de la réaction est 0,5-15 min.

13. Composé de moulage de polyester semi-aromatique, comprenant les composants suivants en pourcentages en poids :

   5-95 % en poids du polyester semi-aromatique selon l'une quelconque des revendications 1-10,
   5-95 % en poids d'un additif et/ou d'autres polymères,
   0-70 % en poids d'un matériau de renforcement et/ou d'une charge.

14. Application du polyester semi-aromatique selon l'une quelconque des revendications 1-10 dans la préparation d'un produit dégradable compostable, **caractérisée en ce que** ledit produit dégradable compostable est une fibre, une feuille ou un récipient.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103483571 B

**Non-patent literature cited in the description**

- *J. Appl. Polym. Sci.,* 2007, vol. 104 (4), 2643-2649
- *CHEMICAL ABSTRACTS,* 627-27-0
- *CHEMICAL ABSTRACTS,* 38460-95-6